# EUROPEAN PATENT APPLICATION

(11) **EP 1 707 542 A2**
(43) Date of publication of application: **04.10.2006**
(21) Application number: 06006508.3
(22) Date of filing: 29.03.2006
(51) Int. Cl.: C04B 24/26, C08F 22/06, C04B 103/40

(54) **Powdery cement dispersant**

(30) Priority: 31.03.2005 JP 2005104638
(71) Applicant: Nippon Shokubai Co.,Ltd., Osaka-shi, Osaka 541-0043 (JP)
(72) Inventor: Kawakami, Hirokatsu, Izumiotsu-shi Osaka 595-0006 (JP); Kawahara, Washin, Ikoma-shi Nara 630-0213 (JP); Tanaka, Hiromichi, Toyonaka-shi Osaka 561-0852 (JP)
(74) Representative: Luderschmidt, Schüler & Partner

(57) **Abstract**

The present invention provides a means to express superior dispersibility and to be easily pulverized in the polycarboxylic acid type cement dispersant. The purpose is attained by a powdery cement dispersant having, as a main component, a polycarboxylic acid type copolymer having a repeating unit (I) derived from an unsaturated polyalkyleneglycol type monomer, a repeating unit (II) derived from an unsaturated carboxylic acid type monomer and a repeating unit (III) derived from a branched compound having a branched structure containing 3 or more polyalkyleneimine chains or polyoxyalkylene chains in a molecule, or a powdery cement dispersant comprising a polycarboxylic acid type copolymer (A) having a repeating unit (IV) derived from an unsaturated polyalkyleneglycol type monomer and a repeating unit (V) derived from an unsaturated carboxylic acid type monomer and a branched compound (B) with a branched structure containing 3 or more polyalkyleneimine chains or polyoxyalkylene chains in a molecule.

## Description

### Background of the Invention

### Field of the Invention:

The present invention relates to a powdery cement dispersant, and more specifically, a powdery cement dispersant comprising a polycarboxylic acid type polymer.

### Description of Related art:

Concrete has become one of indispensable materials in the modern society, and widely used for a variety of applications such as buildings, houses, bridges and tunnels. Concrete is usually formed through hardening a concrete composition containing cement, water and aggregates. In the concrete composition, various admixtures in addition to these materials are incorporated in order to enhance various performances of concrete composition such as fluidity, air-entraining property and freezing and thawing resistance.

As one of admixtures, cement dispersant has been known. Since a concrete with less water content generally has higher durability, a quantity of water to be incorporated in a concrete composition is preferably as low as possible. However, too small quantity of water to be incorporated cannot ensure sufficient fluidity of the concrete composition resulting in lowering in workability. Cement dispersant has a function to reduce a quantity of water to be incorporated in a concrete composition to contribute to solve this problem.

As one of the cement dispersants, a polycarboxylic acid type cement dispersant containing a carboxylic acid or a salt thereof in a repeating unit of the polymer has been known. In addition, it has also been known that fluidity of cement paste can be improved by introducing a polyalkyleneoxide (PAO: -(AO)ₙ-) into a polycarboxylic acid type polymer. A polycarboxylic acid type cement dispersant introduced with a polyalkyleneoxide is more superior in cement dispersibility, fluidity of cement composition in fresh state, fluidity retention property, segregation resistance and hardened material strength expressing property, compared with conventional naphthalene type or melamine type cement dispersant.

The polycarboxylic acid type cement dispersant introduced with a polyalkyleneoxide can be classified into several types depending on a monomer to be used as a rawmaterial and bonding form of polyalkyleneoxide. These types include, for example, a polymer in which (meth) acrylic acid or a salt thereof is used as one of raw material monomers and polyalkyleneoxide is bonded via an ether linkage to a main chain of another raw material monomer (alkenyl PAO ether /acrylic acid structure: see the following formula (1), wherein COOY represents a carboxyl group or a salt thereof), a polymer in which maleic acid, fumaric acid or a salt thereof is used as one of raw material monomers and polyalkyleneoxide is bonded via an ether linkage to a main chain of another raw material monomer (alkenyl PAO ether / maleic acid sutructure: see the following formula (2)), and a polymer in which (meth) acrylic acid or a salt thereof is used as one of raw material monomers and polyalkyleneoxide is bonded via an ester linkage to a main chain of another raw material monomer (PAO (meth)acrylate ester / (meth)acrylic acid structure: see the following formula (3)). Further, the various polymers can be classified into acid type, monovalent metal salt type, divalent metal salt type, trivalent metal salt type, and the like depending on whether the carboxylic acid moieties remain carboxylic acids or become metal salts.

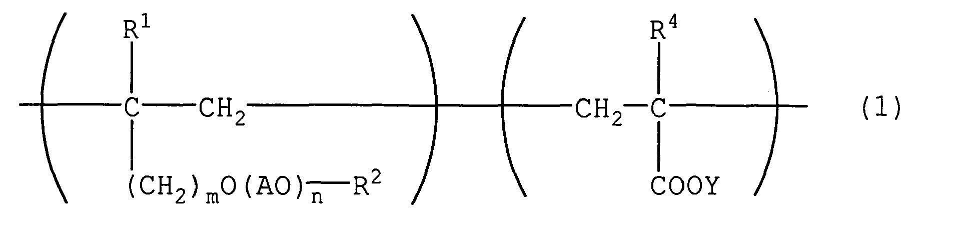

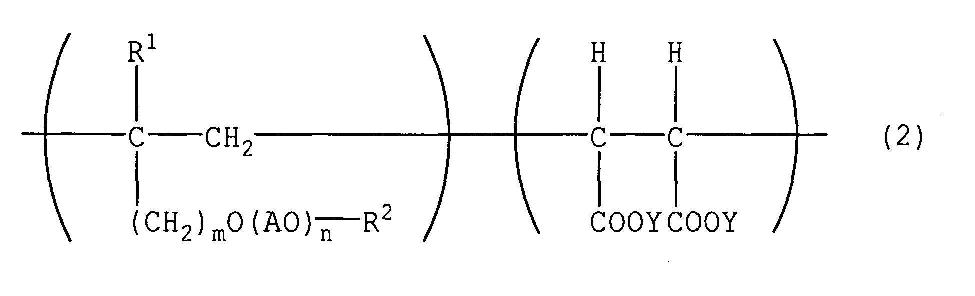

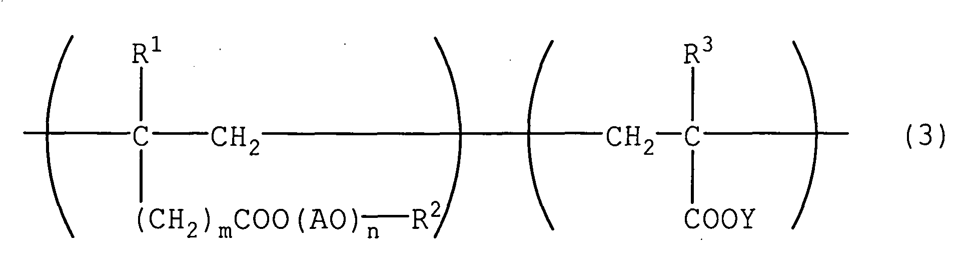

Conventionally, for example, JP-A-2000-26145 discloses monovalent metal salt type polymers of a PAO (meth) acrylate ester / (meth) acrylic acid structure and a PAO (meth) acrylate ester / alkenyl PAO ether / (meth)acrylic acid structure. Also, for example, JP-A-2002-167255 discloses monovalent metal salt type polymers of a PAO (meth)acrylate ester /(meth) acrylic acid structure and an alkenyl PAO ether / acrylic acid structure. Further, for example, JP-A-2002-167256 discloses divalent metal salt type polymers of a PAO (meth)acrylate ester / (meth)acrylic acid structure and an alkenyl PAO ether / acrylic acid structure. Still further, for example, JP-A-9-309756 discloses a divalent metal salt type polymer of an alkenyl PAO ether / maleic acid structure.

In order to improve characteristics of cement dispersant, a technique in which the polycarboxylic acid type polymer is added with another component has been proposed. For example, a cement dispersant, in which a polycarboxylic acid type polymer and PEG are mixed, has been disclosed (see, for example, JP-A-2000-26146). Further, a cement composition, in which alkyleneoxide is incorporated to a polycarboxylic acid type polymer and a polyalkylenepolyamine by addition polymerization, has been disclosed (see, for example, JP-A-2000-109357).

### Brief summary of the Invention

The polycarboxylic acid type cement dispersant as described above is usually used in a liquid form. However, in view of transporting cost, etc., cement dispersant is preferably in a powdery state. Cement dispersant is also required to have high dispersibility. However, the conventional polycarboxylic acid type cement dispersant, in which a polyalkyleneoxide moiety is present in a polymer, tends to be waxy or syrupy even when water is removed, and is hardly pulverized.

Therefore, an object of the present invention is to provide a means to express superior dispersibility and to be easily pulverized in the polycarboxylic acid type cement dispersant.

The inventors of the present invention have, after extensively studying a way to solve the above problem, found that by using a branched compound having a branched structure containing 3 or more polyalkyleneimine chains or polyoxyalkylene chains in a molecule bonded to or mixed with a polycarboxylic acid type polymer having a specific structure containing a polyalkyleneoxide moiety, a solution containing a polycarboxylic acid type polymer that has conventionally been difficult to pulverize can be easily pulverized without impairing dispersibility thereof. Thus, based on such knowledge, the present invention has been completed. In this connection, though a mechanism by which such composition can provide the above-described effect is not clear, but such a mechanism is presumed that due to an interaction of the branched compound and the polycarboxylic acid type polymer having a specific structure, a molecular weight of the polymer increases pseudo-evently. In this connection, since said mechanism is merely a presumption, even if the above-described effect is obtained actually by another mechanism, the technical scope of the present invention is not influenced at all.

Specifically, in an aspect of the present invention, a powdery cement dispersant comprising, as a main component, a polycarboxylic acid type copolymer having a repeating unit (I) derived from an unsaturated polyalkyleneglycol type monomer, a repeating unit (II) derived from an unsaturated carboxylic acid type monomer and a repeating unit (III) derived from a branched compound monomer having a branched structure containing 3 or more polyalkyleneimine chains or polyoxyalkylene chains in a molecule is provided.

Further, in another aspect of the present invention, a powdery cement dispersant comprising a polycarboxylic acid type copolymer (A) having a repeating unit (IV) derived from an unsaturated polyalkyleneglycol type monomer and a repeating unit (V) derived from an unsaturated carboxylic acid type monomer and a branched compound (B) with a branched structure containing 3 or more polyalkyleneimine chains or polyoxyalkylene chains in a molecule is provided.

### Detailed Description of the Invention

Hereinbelow, the present invention will be explained in detail by classifying into several embodiments, but the technical scope of the present invention should be set down based on the descriptions in the claims, and should not be limited by the following specific embodiments.

An aspect of the present invention relates to a powdery cement dispersant comprising, as a main component, a polycarboxylic acid type copolymer having a repeating unit (I) derived from an unsaturated polyalkyleneglycol type monomer, a repeating unit (II) derived from an unsaturated carboxylic acid type monomer and a repeating unit (III) derived from a branched compound monomer having a branched structure containing 3 or more polyalkyleneimine chains or polyoxyalkylene chain in a molecule.

Hereinbelow, said aspect will be explained by classifying to several embodiments depending on type of the branched compound forming a repeating unit (III) and types of a repeating unit (I) and a repeating unit (II).

### First Embodiment

In the present embodiment, a repeating unit (I) derived from an unsaturated polyalkyleneglycol type monomer is represented by the following Chemical Formula 1 (hereinafter, the repeating unit represented by the following Chemical Formula 1 is also referred to as "repeating unit (I-a)"), and a repeating unit (II) derived from an unsaturated carboxylic acid monomer is represented by the following Chemical Formula 2 (hereinafter, the repeating unit represented by the following Chemical Formula 2 is also referred to as "repeating unit (II-a)"). 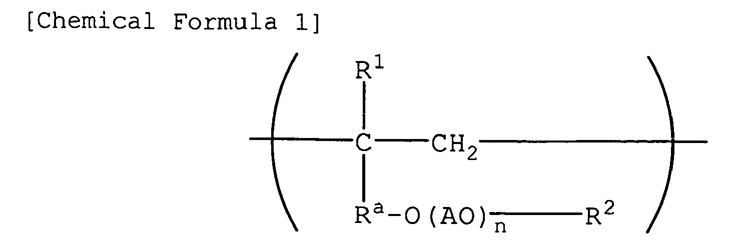 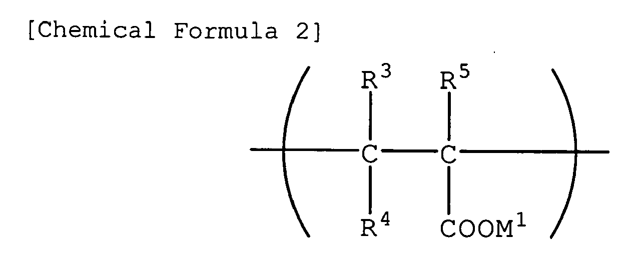 wherein R¹ represents a hydrogen atom or a methyl group, R² represents a hydrogen atom or a hydrocarbon group having 1 to 30 carbon atoms, each of AO independently represents an oxyalkylene group having 2 to 18 carbon atoms, R^{a} represents an alkylene group having 0 to 2 carbon atoms, n represents an average addition mole number of the oxyalkylene group and is 2 to 300, each of R³ and R⁴ independently represents a hydrogen atom, a methyl group or -COOM² (provided that a case where both of R³ and R⁴ are -COOM² is excluded), R⁵ represents a hydrogen atom, a methyl group or -CH₂COOM³ (provided that when R⁵ is -CH₂COOM³, each of R³ and R⁴ independently represents a hydrogen atom or a methyl group), and each of M¹, M² and M³ independently represents a hydrogen atom, a metal atom, an ammonium group or an organic amine group.

In the present embodiment, the "branched compound monomer", which forms a repeating unit (III), means a monomer in which a polymerizable unsaturated double bond is introduced into the above-described specific branched compound.

In the present embodiment, the branched compound is a compound in which an alkyleneoxide is added to a polyalkyleneimine (hereinafter, also referred to as "PAI/PAO adduct"). The PAI/PAO adduct has, for example, a structure represented by the following Chemical Formula 7, but is not limited only to the form. 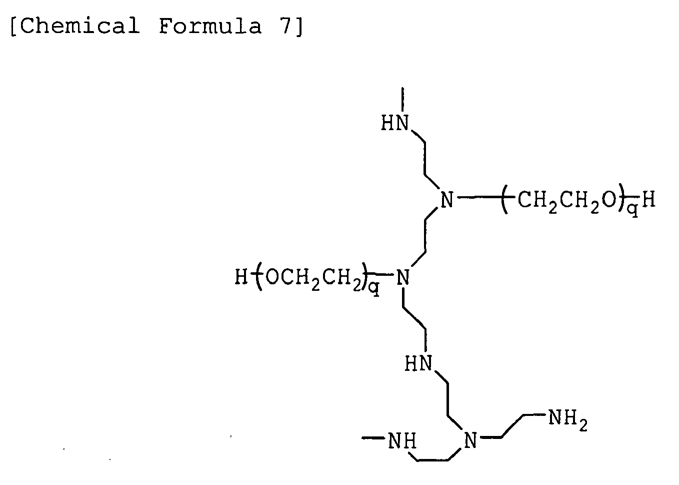 wherein each of q independently represents an addition mole number of an oxyethylene group.

As shown in Chemical Formula 7, the PAI/PAO adduct, which is the branched compound of this embodiment, is a compound in which a polyethyleneoxide is added to a polyethyleneimine. Namely, the branched compound of this embodiment represented by the Chemical Formula 7 has a structure having 3 or more extended chains consisting of a polyethyleneimine chain or a polyoxyethylene chain (branched structure).

The powdery cement dispersant of the present embodiment contains, as a main component, a polycarboxylic acid type copolymer having a form in which a polycarboxylic acid type polymer having a specific structure with a polyalkyleneoxide moiety is copolymerized with a PAI/PAO adduct monomer. Here, the "PAI/PAO adduct monomer" means those having a polymerizable unsaturated double bond among the PAI/PAO adductmonomers. Details of the PAI/PAO adduct and the PAI/PAO adduct monomer will be described later.

Hereinbelow, a repeating unit (I-a) represented by the Chemical Formula 1 and a repeating unit (II-a) represented by the Chemical Formula 2 will be explained in detail, respectively, and after that, "PAI/PAO adduct monomer" will be explained in detail.

### Repeating Unit (I-a) Represented by Chemical Formula 1

In the repeating unit (I-a) represented by the Chemical Formula 1, R¹ represents a hydrogen atom or a methyl group, and R² represents a hydrogen atom or a hydrocarbon group having 1 to 30 carbon atoms. Said hydrocarbon group includes, for example, alkyl group, alkenyl group, aryl group and alkylphenyl group. Such alkyl group includes, for example, methyl group, ethyl group, propyl group, isopropyl group, butyl group, isobutyl group, sec-butyl group, tert-butyl group, pentyl group and cyclohexyl group. Further, "alkenyl group" means a monovalent group represented by the general formula CₙH₂ₙ₋₁ in which one hydrogen atom is removed from an optional carbon atom in an alkene. Such alkenyl group includes, for example, vinyl group, allyl group, propenyl group and isopropenyl group. Further, aryl group includes, for example, phenyl group and naphthyl group, and alkylphenyl group includes, for example, methylphenyl group and ethylphenyl group. In view of fluidity, R² is preferably a hydrogen atom or a methyl group.

In the repeating unit (I-a) represented by the Chemical Formula 1, AO represents an oxyalkylene group having 2 to 18 carbon atoms. "A" constituting such oxyalkylene group includes, for example, ethylene group, trimethylene group, methylethylene group, ethylethylene group, phenylethylene group, tetramethylene group and 1,2-dimethylethylene group. Namely, "AO" in the Chemical Formula 1 is an oxyalkylene group containing the above-described functional group (for example, oxyethylene group). Among them, from the viewpoint of superior fluidity, A is preferably an ethylene group or a methylethylene group. Further, 2 or more different types of AO structures may optionally be present in a repeating unit represented by (AO)ₙ. However, in view of easiness in producing the polyoxyalkylene chain and controlling the structure thereof, the repeating structure represented by (AO)ₙ is preferably a repeated structure of the same AO unit.

In the repeating unit (I-a) represented by the Chemical Formula 1, R^{a} represents an alkylene group having 0 to 2 carbon atoms. Here, "an alkylene group having 0 carbon atom" means a structure in which O(AO)ₙR² directly binds to a carbon atom constructing a main chain without any moiety represented by R^{a}. Further, R^{a} having 1 carbon atom means a structure in which a carbon atom of a main chain and 0 (AO) ₙR² are connected through a methylene group, and R^{a} having 2 carbon atoms means a structure in which a carbon atom of a main chain and O (AO)ₙR² are connected through an ethylene group or a methylmethylene group.

In the repeating unit (I-a) represented by the Chemical Formula 1, n means an average addition mole number of the oxyalkylene group represented by "AO", and is an integer of 2 to 300. From the viewpoints of superior fluidity and easiness in pulverization, n is preferably 10 to 200, and more preferably 20 to 150.

Monomer forming the repeating unit (I-a) represented by the Chemical Formula 1 includes, for example, an alkyleneoxide adduct of an unsaturated alcohol obtained by adding 2 to 300 moles of alkyleneoxide to an unsaturated alcohol such as vinyl alcohol, allyl alcohol, methallyl alcohol, isoprenealcohol(3-methyl-3-butene-1-ol) and 3-methyl-3-butene-2-ol. These monomers may be used in combination of 2 or more members thereof.

Further, the monomers forming the repeating unit (I-a) represented by the Chemical Formula 1 may be commercially available one or prepared by personal synthesis. In synthesis, the knowledge already obtained is referred to, as appropriate. For example, when alkyleneoxide is added to an unsaturated alcohol, an alkyleneoxide such as ethyleneoxide, propyleneoxide and butyleneoxide may be added to an unsaturated alcohol such as vinyl alcohol, allyl alcohol, methallyl alcohol, isoprenealcohol(3-methyl-3-butene-1-ol) and 3-methyl-3-buten-2-ol. Temperature condition in conducting the addition reaction of alkyleneoxide is not particularly limited, but preferably 80 to 155°C, and more preferably 90 to 150°C.

### Repeating Unit (II-a) Represented by Chemical Formula 2

In the repeating unit (II-a) represented by the Chemical Formula 2, each of R³ and R⁴ independently represents a hydrogen atom, a methyl group or -COOM², provided that a case where both of R³ and R⁴ are -COOM² is excluded. Further, R⁵ represents a hydrogen atom, a methyl group or -CH₂COOM³, provided that when R⁵ is -CH₂COOM³, each of R³ and R⁴ independently represents a hydrogen atom or a methyl group and does not represent -COOM² Further, in the repeating unit represented by the Chemical Formula 2, each of M¹, M² and M³ independently represents a hydrogen atom, a metal atom, an ammonium group or an organic amine group. When M¹, M² or M³ is a metal atom, said metal atom may be any of monovalent, divalent and trivalent, and specifically, a suitable metal atom includes a monovalent metal atom like an alkali metal atom such as lithium, sodium and potassium; a divalent metal atom like an alkaline earth metal atom such as calcium and magnesium; and a trivalent metal atom such as aluminum and iron. Among them, from the viewpoint to improve easiness of pulverization, M¹, M² or M³ is preferably a monovalent metal atom or a divalent metal atom. Further, the ammonium group is a functional group represented by "-NH₃⁺". And the organic amine group includes, for example, a residual group derived from organic amines like an alkanol amine such as monoethanolamine, diethanolamine and triethanolamine; an alkylamine such as monoethylamine, diethylamine and triethylamine; and a polyamine such as ethylenediamine and triethylenediamine.

When each of R³ and R⁴ is a hydrogen atom, the repeating unit (II-a) represented by the Chemical Formula 2 becomes a moiety derived from acrylic acid (when R⁵ is a hydrogen atom) and methacrylic acid (when R⁵ is a methyl group). Also, when R⁴ is a carboxyl group and R⁵ is a hydrogen atom, the repeating unit represented by the Chemical Formula 2 becomes a moiety derived from maleic acid and fumaric acid. Further, when R⁴ is a carboxyl group and R⁵ is a -CH₂COOH group, the repeating unit represented by the Chemical Formula 2 becomes a moiety derived from itaconic acid.

Monomer forming the repeating unit (II-a) represented by the Chemical Formula 2 includes acrylic acid, methacrylic acid, sodiumacrylate, sodiummethacrylate, ammoniumacrylate and ammonium methacrylate. These monomers may be used in combination of 2 or more members. These monomers may be commercially available one or prepared by personal synthesis.

Repeating Unit (III) Derived from PAI/PAO Adduct Monomer

The powdery cement dispersant of this embodiment further has, in addition to the above-described repeating unit (I-a) represented by the Chemical Formula 1 and the repeating unit (II-a) represented by the Chemical Formula 2, a repeating unit (III) derived from a PAI/PAO adduct monomer. Said repeating unit (III) is a divalent repeating unit resulting by scission of one bond of a polymerizable unsaturated double bond possessed by the PAI/PAO adduct monomer.

As described above, the PAI/PAO adduct is a compound in which an alkyleneoxide is added to a polyalkyleneimine.

"Polyalkyleneimine" is a polymer obtained by polymerizing an alkyleneimine (e.g. ethyleneimine (aziridine)). In other words, polyalkyleneimine has a ring-opening structure of an alkyleneimine (e.g. ring-opening structure of ethyleneimine (-CH₂CH₂NX- (wherein X is a hydrogen atom or a bond))) as a repeating unit. In this connection, in the present embodiment, polyalkyleneimine may be commercially available one or prepared by personal synthesis.

Alkyleneimine forming such polyalkyleneimine includes, for example, an alkyleneimine having 2 to 8 carbon atoms such as ethyleneimine (aziridine), propyleneimine, 1,2-butyleneimine and2,3-butyleneimine. Further, a carbon atom of these alkyleneimines may be substituted by a proper substituent unless the substituent adversely affects on the present invention. Such substituent includes, for example, hydroxyl group; alkoxyl group such as methoxy group and ethoxy group; and halogen atom such as fluorine atom, chlorine atom and bromine atom. In this connection, in the present embodiment, polyalkyleneimine may be a homopolymer composed of only one kind of repeating unit or a copolymer composed of 2 or more kinds of repeating units. However, in view of easiness in producing polyalkyleneoxide or in controlling structure thereof, polyalkyleneimine is preferably a homopolymer composed of only one kind of repeating unit. When a polyalkyleneimine is composed of 2 or more kinds of repeating unit, polymerization mode of each repeating unit is not particularly limited, and any mode of random polymerization, block polymerization, alternate polymerization and the like can be employed.

Further, polyalkyleneimine may be a straight chain (that is, all nitrogen atoms in a repeating unit consisting of alkyleneimine are secondary nitrogen atoms (imino groups)), or a branched chain (that is, nitrogen atoms in a repeating unit consisting of alkyleneimine contain a tertiary nitrogen atom), or a three-dimensionally cross-linked structure, so long as the resultant PAI/PAO compound after formed has a branched structure as described above. Also, polyalkyleneimine is preferably polyethyleneimine or polypropyleneimine. In particular, from the viewpoint of salt cross-linking with carboxylic acid, polyethyleneimine is particularly preferable to be used as a polyalkyleneimine.

Average number of nitrogen atom in polyalkyleneimine is preferably 3 to 300, more preferably 3 to 100, and particularly preferably 3 to 50. When average number of nitrogen atom in polyalkyleneimine is a value in the above range, a superior effect can be exerted as a cement additive having superior affinity to cement.

In the present embodiment, the branched compound is a PAI/PAO adduct. Therefore, addition mode of alkyleneoxide to polyalkyleneimine will be explained below. However, the technical scope of the present invention is not limited to a "branched compound having a form of PAI/PAO adduct", but a simple polyalkyleneimine in which no alkyleneoxide is added, can be used as the branched compound.

PAI/PAO adduct monomer has a group formed by one oxyalkylene group or a group formed by adding 2 or more oxyalkylene groups (polyoxyalkylene group). In the present embodiment, polyoxyalkylene group may be a homopolymer composed of only one kind of repeating unit or a copolymer composed of 2 or more kinds of repeating units. However, in view of easiness in producing polyoxyalkylene group and controlling structure thereof, polyoxyalkylene group is preferably a homopolymer composed of only one kind of repeating unit. When a polyoxyalkylene group is composed of 2 or more kinds of repeating unit, polymerization mode of each repeating unit is not particularly limited, and any mode of random polymerization, block polymerization, alternate polymerization and the like can be employed.

Oxyalkylene group can be exemplified by a group derived from a compound such as ethyleneoxide (EO), trimethyleneoxide, propyleneoxide (PO), isobutyleneoxide, 1-butneoxide, 2-buteneoxide, trimethylethyleneoxide, tetramethyleneoxide, tetramethylethyleneoxide, butadienemonooxide, octyleneoxide, styreneoxide and 1,1-diphenylethyleneoxide. From the viewpoint of superior fluidity and easy pulverization, oxyalkylene group is preferably an ethylene group or a methylethylene group.

Average addition mole number of oxyalkylene group in the polyoxyalkylene group is preferably 2 to 200 per one polyoxyalkylene group. An average addition mole number over 200couldlower polymerizability ofsaid monomer. The average addition mole number is more preferably 10 to 150, and further more preferably 20 to 100. When average addition mole number of oxyalkylene group in a polyoxyalkylene group is a value in the above range, the effect of the polycarboxylic acid type copolymer to improve fluidity of cement composition can be sufficiently exerted.

A group to be formed by the oxyalkylene group (polyoxyalkylene group) is preferably one mainly composed of an oxyethylene group (-OCH₂CH₂-). In this connection, "mainly composed of an oxyethylene group" means that when 2 or more kinds of oxyalkylene groups are present in a monomer, oxyethylene group occupies majority in the whole oxyalkylene groups present. By such structure, a polycarboxylic acid type copolymer obtained by copolymerization of the PAI/PAO adduct monomer can have an improved hydrophilic property which results in sufficient exertion of the effect thereof.

In the oxyalkylene group, when "mainly composed of an oxyethylene group" is expressed in % by mole of oxyethylene group based on the total oxyalkylene groups being 100%, oxyethylene group is preferably 50 to 100 % by mole. When a content of oxyethylene group is less than 50 % by mole, hydrophilic property of a group formed from the oxyalkylene group could be lowered. Content of oxyethylene group is more preferably not less than 60 % by mole, further more preferably not less than 70 % by mole, particularly preferably not less than 80 % by mole, and most preferably not less than 90 % by mole.

As described above, the "PAI/PAO adduct monomer" is those having a polymerizable unsaturated double bond among PAI/PAO adducts, and can act as an unsaturated monomer.

Method for introducing an unsaturated group into a PAI/PAO adduct to prepare the PAI/PAO adduct monomer includes, for example, a method for introducing an unsaturated group by ester exchange of a hydroxyl group of an adduct compound of polyalkyleneimine and alkyleneoxide with an unsaturated compound such as (meth) acrylic acid and alkyl (meth) acrylate ester; a method for introducing an unsaturated group by amidation of an amino group of an adduct compound of polyalkyleneimine and alkyleneoxide with an unsaturated compound such as (meth) acrylic acid and alkyl (meth) acrylate ester; and a method for introducing an unsaturated group by reacting a hydroxyl group of an adduct compound of polyalkyleneimine and alkyleneoxide with an epoxy compound such as glycidyl (meth)acrylate and (meth)allyl glycidyl ether, but the method is not particularly limited in the present invention.

Unsaturated compound to be used to obtain a PAI /PAO adduct monomer by introducing an unsaturated group into a PAI/PAO adduct includes, for example, unsaturated carboxylic acid such as (meth)acrylic acid, maleic acid, fumaric acid and citraconic acid; unsaturated carboxylic anhydride such as (meth)acrylic anhydride and maleic anhydride; unsaturated carboxylic acid halogenide such as (meth) acryloyl chloride; unsaturated carboxylic acid ester such as alkyl (meth) acrylate ester having 1 to 30 carbon atoms and maleate monoester having 1 to 30 carbon atoms, maleate diester having 1 to 30 carbon atoms; and epoxy compound such as glycidyl (meth)acrylate and (meth)allyl glycidyl ether. These compounds may be used singly or in combination of 2 or more members.

Weight average molecular weight of the PAI/PAO adduct monomer is not particularly limited, but preferably 1,000 to 100,000, more preferably 5,000 to 70,000, further more preferably 5,000 to 50,000, and particularly preferably 10, 000 to 30, 000. In this connection, as a value of the weight average molecular weight of the PAI/PAO adduct monomer, a value obtained by GPC under the following measuring conditions is employed.
Model of apparatus: Waters LCM1;
Detector: Waters 410 Differential Refraction Detector;
Analysis Software: Waters Millennium Ver. 2.18;
Eluent: Eluent prepared by dissolving 115.6 g of sodium acetate trihydrate in a mixture of 10, 999 g of water and 6, 001 g of acetonitrile, and adjusting to pH 6 with a 30% sodium hydroxide aqueous solution;
Flow rate of eluent: 0.8 ml/min;
Column temperature: 35°C;
Column: TSKgel Guardcolumn SWXL + G4000SWXL + G3000SWXL + G2000SWXL produced from Tosoh Corp; and
Standard substance: Polyethylene glycol, weight average molecular weight (Mw): 272,500, 219,300, 85,000, 46,000, 24,000, 12,600, 4,250, 7,100 and 1,470.

Polycarboxylic acid type copolymer constituting the powdery cement dispersant of the present embodiment contains, as essential components, a repeating unit (I-a) represented by the Chemical Formula 1, a repeating unit (II-a) represented by the Chemical Formula 2, and a repeating unit (III) derived from a PAI/PAO adduct monomer, but a repeating unit other than these may be contained. Monomer forming another repeating unit includes, for example, unsaturated sulfonic acid having a sulfonic acid group such as 2-(meth)acrylamide-2-methylpropane-sulfonic acid, 2-hydroxy- 3-allyloxysulfonic acid, sulfoethyl (meth)acrylate, sulfopropyl (meth)acrylate and styrenesulfonic acid; unsaturated amide such as (meth)acrylamide and (meth)acrylalkylamide; vinyl esters such as vinyl acetate and vinyl propionate; styrene derivatives such as styrene and bromostyrene; and monovalent metal salt, divalent metal salt, ammonium salt and organic ammonium salt thereof. Each of these repeating units may be present in random polymerization, block polymerization, alternate polymerization or the like.

However, to obtain a powdery cement dispersant having superior dispersibility and capable of being easily pulverized in production, the above-described three essential repeating units are preferably major repeating units. Specifically, the above-described three essential repeating units are contained preferably in 80 to 100%, and more preferably in 90 to 100% based on the total quantity of repeating units in the polycarboxylic acid type copolymer.

In the polycarboxylic acid type copolymer, which is a main component of the powdery cement dispersant of the present embodiment, ratio of contents of the repeating unit (I-a) represented by the Chemical Formula 1, the repeating unit (II-a) represented by the Chemical Formula 2, and the repeating unit (III) derived from the PAI/PAO adduct monomer is not particularly limited, and determined, as appropriate, considering desired dispersibility. However, the ratio is preferably (I-a) / (II-a) / (III) = (40 to 90) / (5 to 30) / (5 to 50) % by weight, more preferably (I-a) / (II-a) /(III) = (50 to 90) / (5 to 30) / (5 to 40) % by weight, and further more preferably (I-a) / (II-a) / (III) = (60 to 80) / (10 to 20) / (10 to 30) % by weight, based on the total contents of these repeating units being 100% by weight. Content of each component in the polycarboxylic acid type copolymer is preferably a value in the above range in that the copolymer is superior in dispersibility. In this connection, as a value of content of these repeating units, a value measured by a technique such as NMR and acid value measurement is employed.

Weight average molecular weight of the polycarboxylic acid type copolymer which is a main component of the powdery cement dispersant of the present embodiment is, from the viewpoint of superior dispersibility, preferably 1,000 to 500,000, and more preferably 5,000 to 100,000 in a converted value to that of polyethyleneglycol. In this connection, value of said weight average molecular weight is determined by the method described later in Example is used.

Average particle size of the polycarboxylic acid type copolymer, which is a main component of the powdery cement dispersant of the present embodiment, is preferably 1 to 500 µm, and more preferably 10 to 100 µm. An average particle size less than 1 µm has a risk that the powdery cement dispersant tends to cohere, whereas an average particle size over 500 µm could lead to decrease solubility to water and lower dispersibility to cement.

Method for producing the powdery cement dispersant of the present embodiment is not particularly limited, and conventionally well-known knowledge concerning production of polymers can be referred to, as appropriate. The powdery cement dispersant can be produced, for example, by copolymerizing each of monomers forming the repeating unit (I-a) represented by the Chemical Formula 1 and the repeating unit (II-a) represented by the Chemical Formula 2 together with the PAI/PAO adduct monomer, and drying the resultant copolymer to pulverize. The powdery cement dispersant may be synthesized based on newly obtained knowledge.

In order to obtain such copolymer, each of the above-described monomers may be mixed together in a desired content ratio, and polymerized using a polymerization initiator. Polymerization can be performed by a method such as polymerization in a solvent and mass polymerization. The polymerization in a solvent can be conducted in a batch system or a continuous system, and the solvent to be used in such case includes, for example, water; lower alcohols such as methyl alcohol, ethyl alcohol and 2-propanol; aromatic or aliphatic hydrocarbons such as benzene, toluene, xylene, cyclohexane and n-hexane; ester compounds such as ethyl acetate; and ketone compounds such as acetone and methyl ethyl ketone. In view of solubility of the raw monomers and the polycarboxylic acid type copolymer to be obtained, as well as convenience of said polycarboxylic acid type copolymer in use, it is particularly advantageous to use water, methyl alcohol, ethyl alcohol, 2-propanol, or the like as a solvent.

When polymerization is performed in an aqueous medium, a water-soluble polymerization initiator such as persulfate salt of ammonium or alkaline metal and hydrogen peroxide can be used. In this case, an accelerator such as sodiumbisulfite, Mohr's salt, ascorbic acid (or salt thereof) and rongalit can be used in combination. Further, in polymerization in which a solvent such as lower alcohol, aromatic hydrocarbon, aliphatic hydrocarbon, ester compound and ketone compound is used, peroxides such as benzoyl peroxide and lauroyl peroxide; hydroperoxides such as cumene hydroperoxide; azo compounds such as azobisisobutyronitrile can be used as a polymerization initiator. In this case, an accelerator such as amine compound can be used in combination. Further, when a mixed solvent of water - lower alcohol is used, an initiator or a combination of an initiator and an accelerator can be selected to use, as appropriate, from the above various polymerization initiators and combinations of an initiator and an accelerator. Polymerization temperature can be determined, as appropriate, depending on a solvent and a polymerization initiator to be used, but polymerization is performed usually in a range of 0 to 120°C.

Mass polymerization is performed, for example, using a peroxide such as benzoyl peroxide and lauroyl peroxide; a hydroperoxide such as cumene hydroperoxide; and an azo compound such as azobisisobutyronitrile as a polymerization initiator, at a temperature in a range of 50 to 200°C.

For the purpose of adjusting molecular weight of the resultant polycaroboxylic acid type copolymer, hypophosphorus acid (or salt thereof) and thiol type chain transfer agent can be used in combination. In this case, thiol type chain transfer agent to be used includes, for example, mercaptoethanol, thioglycerol, thioglycolic acid, 2-mercaptopropionic acid, 3-mercaptopropionic acid, thiomalic acid, octyl thioglicolate, octyl 3-mercaptopropionate, octyl mercaptan and dodecyl mercaptan, and one or more kinds of these compounds can be used. Further, in order to adjust molecular weight of the polycarboxylic acid type copolymer, a monomer having a high chain transfer ability such as (meth)allylsulfonic acid (or salt thereof) can be effectively used.

Drying means for drying the copolymer to pulverize is not particularly limited. Drying means may be selected depending on property of the copolymer. Such drying means for a solution containing the copolymer includes, for example, drying and pulverization method, salting-out method, coagulating sedimentation method, freeze-drying method, coagulation cracking and drying method, spray dryer method, drum dryer method and belt dryer method. Among them, from the viewpoint to prevent thermal degradation of the copolymer, a drying means by which the polymer is less heated (for example, freeze-drying method) can be preferably used. In the freeze-drying method, for example, a solution containing the copolymer is rapidly cooled to freeze up using liquid nitrogen, etc., and the frozen copolymer solution is subsequently dried under reduced pressure using a freeze-dry machine. By such procedures, fine particles having a particle size of, for example, around 40 nm to 500 µm can be obtained. Also, in the spray dryer method, the copolymer solution is atomized using a spray dryer, and mixed with hot air to dry in air. By such procedures, fine particles having a average particle size of, for example, not more than 100 µm can be obtained. Further, in the drum dryer method or the belt dryer method, the copolymer solution is dried to a film so that a film thickness becomes not more than 100 µm using a drum dryer or a belt dryer, then this film is crushed and classified. By these procedures, fine particles having a average particle size of, for example, not more than 300 µm can be obtained. In this connection, particle size of the fine particles obtained through pulverization by drying may be further adjusted using an optional crushing / classification means to obtain the powdery cement dispersant having a desired particle size.

### Second Embodiment

The present embodiment is different from the above-described first embodiment in that a repeating unit (I) derived from an unsaturated polyalkyleneglycol type monomer is represented by the following Chemical Formula 3 (hereinafter, the repeating unit represented by the Chemical Formula 3 is also referred to as "repeating unit (I-b)"), and a repeating unit (II) derived from an unsaturated carboxylic acid type monomer is represented by the Chemical Formula 4 (hereinafter, the repeating unit represented by the Chemical Formula 4 is also referred to as "repeating unit (II-b)"). On the other hand, it is the same to the above-described first embodiment that a branched compound consisting a repeating unit (III) derived from the branched compound is a PAI/PAO adduct. 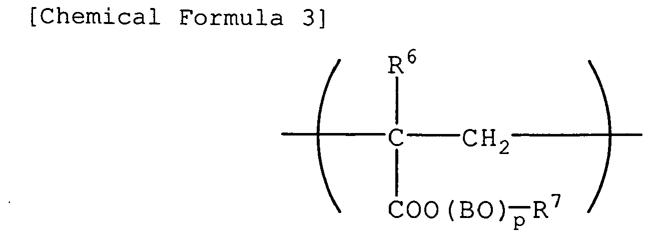 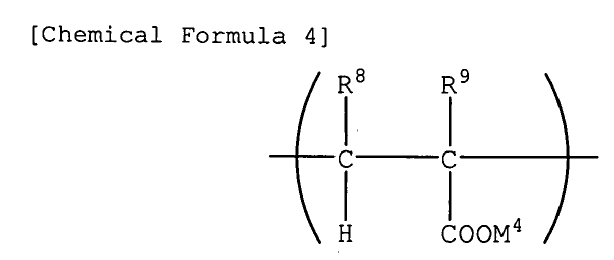 wherein R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and being 2 to 300, R⁸ represents a hydrogen atom or a methyl group, R⁹ represents a hydrogen atom, a methyl group or -CH₂COOM⁵, each of M⁴ and M⁵ independently represents a hydrogen atom, a metal atom, ammonium group or an organic amine group.

Namely, the powdery cement dispersant of the present embodiment contains, as a main component, a polycarboxylic acid type copolymer in which a polycarboxylic acid type polymer having a polyalkyleneoxide moiety but different structure from that in the first embodiment is copolymerized with a PAI/PAO adduct monomer. In other words, the polycarboxylic acid type copolymer which is a main component of the present embodiment is the same to the first embodiment in that the copolymer has a repeating unit (III) derived from a PAI/PAO adduct monomer, but structures of other repeating units of the polycarboxlic acid type copolymer which is a main component of the dispersant for cement are different from those in the first embodiment, and said polymer contains the repeating unit (I-b) represented by the Chemical Formula 3 and the repeating unit (II-b) represented by the Chemical Formula 4 . In this connection, since specific mode of the "repeating unit (III) derived from a PAI/PAO adduct monomer" is same to that in the first embodiment, detailed explanation thereof is omitted here.

Hereinbelow, each of the repeating unit (I-b) represented by the Chemical Formula 3 and the repeating unit (II-b) represented by the Chemical Formula 4 will be explained in detail.

### Repeating Unit (I-b) Represented by the Chemical Formula 3

In the repeating unit (I-b) represented by the Chemical Formula 3, specific modes of R⁶ and R⁷ are same to R¹ and R² in the repeating unit (I-a) represented by the Chemical Formula 1 in the first embodiment. Therefore, detailed explanation thereof is omitted here.

In the repeating unit (I-b) represented by the Chemical Formula 3, specific mode of B is same to A in the repeating unit (I-a) represented by the Chemical Formula 1 in the first embodiment. Therefore, detailed explanation thereof is omitted here.

In the repeating unit (I-b) represented by the Chemical Formula 3, p means an average addition mole number of an oxyalkylene group represented by "BO", and an integer of 2 to 300. From the viewpoint of superior fluidity and easiness in pulverization, p is preferably 10 to 200, and more preferably 20 to 150.

Monomer forming the repeating unit (I-b) represented by the Chemical Formula 3 includes, for example, "ester compound of polyalkyleneglycol and (meth) acrylic acid" such as polyethyleneglycol mono(meth)acrylate, methoxypolyethyleneglycol mono(meth)acrylate, ethoxypolyethyleneglycol mono(meth)acrylate, methoxypolypropyleneglycol mono(meth)acrylate, methoxypolybutyreneglycol mono(meth)acrylate and methoxypolyethyleneglycol polybutyreneglycol mono(meth)acrylate. These compounds may be used in combination of 2 or more members thereof.

Monomer forming the repeating unit (I-b) represented by the Chemical Formula 3 may be commercially available one or prepared by personal synthesis. In synthesis thereof, already obtained knowledge can be referred to, as appropriate. Regarding to method for preparing said monomer, for example, an ester compound of polyalkyleneglycol and (meth)acrylic acid can be synthesized by ester exchange reaction between alkyl (meth)acrylate ester such as methyl (meth)acrylate, ethyl (meth)acrylate and propyl (meth)acrylate and polyalkyleneglycol. Alternatively, a method of esterification of polyalkyleneglycol and (meth) acrylic acid may be used.

### Repeating Unit (II-b) Represented by the Chemical Formula 4

In the repeating unit (II-b) represented by the Chemical Formula 4, R⁸ represents a hydrogen atom or a methyl group, and R⁹ represents a hydrogen atom, a methyl group or -CH₂COOM⁵. Here, R⁸ and R⁹ may be the same or different from each other. Further, each of M⁴ and M⁵ is independently represents a hydrogen atom, a metal atom, ammonium group or an organic amine group, and specific mode thereof is same to M¹ to M³ in the repeating unit (I-a) represented by the Chemical Formula 1 or the repeating unit (II-a) represented by the Chemical Formula 2. Therefore, detailed explanation thereof is omitted here.

Monomer forming the repeating unit (II-b) represented by the Chemical Formula 4 includes, for example, acrylic acid and methacrylic acid. These monomers may be used singly or in combination thereof.

The polycarboxylic acid type copolymer constructing the powdery cement dispersant of the present embodiment contains, as essential components, the repeating unit (I-b) represented by the Chemical Formula 3 and the repeating unit (II-b) represented by the Chemical Formula 4, but another repeating unit may be contained. In this case, specific mode of a monomer forming another repeating unit is same to "another monomer" in the polycarboxylic acid type copolymer which is a main component of the cement dispersant in the first embodiment. Therefore, detailed explanation thereof is omitted here.

In this connection, repeating units (I-a), (II-a), (III) and another repeating unit, or repeating units (I-b), (II-b), (III) and another repeating unit may be copolymerized in a block form or copolymerized randomly.

Here, in order to obtain a cement dispersant, which has superior dispersibility and easiness in pulverization in production, preferably the above-described 3 essential repeating units are major repeating units in the polycarboxylic acid type copolymer. Specifically, the above-described 3 essential repeating units are contained preferably in 80 to 100%, and more preferably in 90 to 100%, based on the total number of the repeating units in the polycarboxylic acid type copolymer.

In the polycarboxylic acid type copolymer, which is a main component of the powdery cement dispersant of the present embodiment, ratio of contents of the repeating unit (I-b) represented by the Chemical Formula 3, the repeating unit (II-b) represented by the Chemical Formula 4 and the repeating unit (III) derived from the PAI/PAO adduct monomer is not particularly limited, and can be determined, as appropriate, considering desired dispersibility, etc. However, preferable mode thereof is the same to the case of the repeating unit (I-a), the repeating unit (II-a) and the repeating unit (III) in the above-described first embodiment. Therefore, detailed explanation thereof is omitted here.

Preferable modes of weight average molecular weight and average particle size of the powdery cement dispersant of the present embodiment are the same to the preferable modes in the above-described first embodiment. Therefore, detailed explanation thereof is omitted here.

Method for producing the powdery cement dispersant of the present embodiment is not particularly limited, and the same procedure to that explained in the section of the first embodiment can be used except that the monomers forming the repeating units represented by the Chemical Formulae 1 and 2, respectively, are replaced by the monomers forming the repeated units represented by the Chemical Formulae 3 and 4, respectively. Therefore, detailed explanation thereof is omitted here.

### Third Embodiment

The present embodiment is similar to the first embodiment in that the repeating unit (I) derived from an unsaturated polyalkyleneglycol type monomer is the repeating unit (I-a) represented by the following Chemical Formula 1, and the repeating unit (II) derived from an unsaturated carboxylic acid type monomer is the repeating unit (II-a) represented by the Chemical Formula 2. On the other hand, the present embodiment is different from the first embodiment in that the branched compound consisting the repeating unit (III) derived from the branched compound is a compound in which an alkyleneoxide is added to a polyhydric alcohol (hereinafter, also referred to as "polyhydric alcohol alkyleneoxide adduct"). 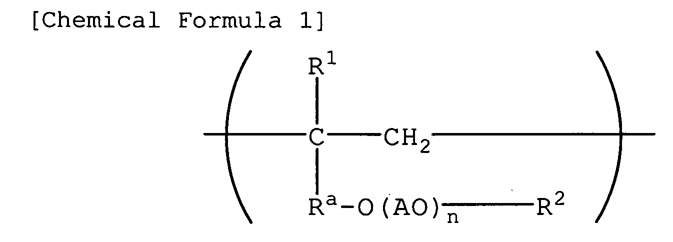 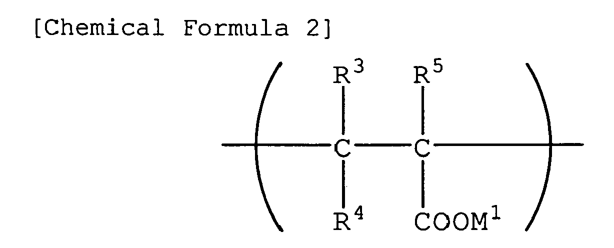 wherein R¹ represents a hydrogen atom or a methyl group, R² represents a hydrogen atom or a hydrocarbon group having 1 to 30 carbon atoms, each of AO independently represents an oxyalkylene group having 2 to 18 carbon atoms, R^{a} represents an alkylene group having 0 to 2 carbon atoms, n represents an average addition mole number of the oxyalkylene group and is 2 to 300, each of R³ and R⁴ independently represents a hydrogen atom, a methyl group or -COOM² (provided that a case where both of R³ and R⁴ are-COOM² is excluded), R⁵ represents a hydrogen atom, a methyl group or -CH₂COOM³ (provided that when R⁵ is -CH₂COOM³, each of R³ and R⁴ represents independently a hydrogen atom or a methyl group), and each of M¹, M² and M³ represents independently a hydrogen atom, a metal atom, an ammonium group or an organic amine group.

Namely, the powdery dispersant of the present embodiment contains, as a main component, a polycarboxylic acid type copolymer in which a polyhydric alcohol alkyleneoxide adduct monomer is copolymerized in a polycarboxylic acid type polymer with a specific structure having a polyalkyleneoxide moiety. In this connection, specific modes of the repeating unit (I-a) derived from an unsaturated polyalkyleneglycol type monomer represented by the Chemical Formula 1 and the repeating unit (II-a) derived from an unsaturated carboxylic acid type monomer represented by the Chemical Formula 2 are similar to those in the above-described first embodiment. Therefore, detailed explanation thereof is omitted here.

"Polyhydric alcohol alkyleneoxide adduct" means a compound having a structure in which an oxyalkylene group is added to a group having a structure in which active hydrogen atoms are removed from hydroxyl groups possessed by the polyhydric alcohol (hereinafter, also simply referred to as "polyhydric alcohol residue"). And "polyhydric alcohol alkyleneoxide adduct monomer" means one having a polymerizable unsaturated double bond among the polyhydric alcohol alkyleneoxide adducts. Polyhydric alcohol alkyleneoxide adduct has, for example, the structure represented by the following Chemical Formula 8, but not limited only to the form. 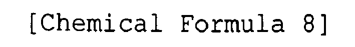 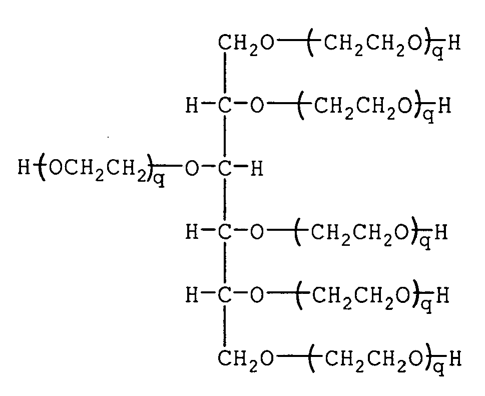 wherein each of q independently represents an addition mole number of an oxyethylene group.

As represented by the Chemical Formula 8, a polyhydric alcohol alkyleneoxide adduct, which is the branched compound of the present embodiment, is a compound in which alkyleneoxide is added to polyhydric alcohol. Specifically, the branched compound of the present embodiment represented by the Chemical Formula 8 has a structure in which all of 6 active hydrogen atoms possessed by sorbitol, a kind of polyhydric alcohol, are extended with polyoxyethylene chains (branched structure).

Hereinbelow, polyhydric alcohol alkyleneoxide adduct and polyhydric alcohol alkyleneoxide adduct monomer will be explained in detail.

The powdery cement dispersant of the present embodiment further has, in addition to the above-described repeating unit (I-a) represented by the Chemical Formula 1 and the repeating unit (II-a) represented by the Chemical Formula 2, a repeating unit derived from a polyhydric alkyleneoxide adduct monomer (hereinafter, also referred to as repeating unit (iii)) as the repeating unit (III) derived from the branched compound. The repeating unit (iii) is a divalent repeating unit formed by scission of one bond of a polymerizable unsaturated double bond possessed by the polyhydric alcohol alkyleneoxide adduct monomer.

"Polyhydric alcohol" constituting "polyhydric alcohol residue" in the polyhydric alcohol alkyleneoxide adduct monomer means a compound having 3 or more hydroxyl groups in a molecule on an average, and specific mode thereof is not particularly limited. In a preferable mode, the polyhydric alcohol is a compound, which is composed of 3 atoms of carbon, hydrogen and oxygen.

Number of hydroxyl groups in a molecule of the polyhydric alcohol is also not particularly limited, and preferably 3 to 300, more preferably 4 to 100, further more preferably 5 to 50, and particularly preferably 6 to 25. When the number of hydroxyl groups in a molecule of the polyhydric alcohol is a value in such range, the polyhydric alcohol alkyleneoxide adduct monomer can sufficiently exert the function thereof and have superior polymerizability.

Preferable specific examples of the polyhydric alcohol include, for example, polyglycidol, glycerol, polyglycerol, trimethylolethane, trimethylolpropane, 1,3,5-pentatriol, erythrytol, pentaerythrytol, dipentaerythrytol, sorbitol, sorbitan, sorbitol glycerol condensate, adnitol, arabitol, xylitol and mannitol. Further, the followings can be preferably used: hexose saccharides such as glucose, fructose, mannose, indoors, sorbose, gulose, talose, tagatose, galactose, allose, psicose and altrose; pentose saccharides such as arabinose, ribulose, ribose, xylose, xylulose and lyxose; tetrose saccharides such as threose, erythrulose and erythrose; other saccharides such as rhamnose, cellobiose, maltose, isomaltose, trehalose, sucrose, raffinose, gentianose and melezitose; sugar alcohol and sugar acid thereof (saccharides: glucose, sugar alcohol: glucit, sugar acid: gluconic acid). Further, derivatives such as partially etherificated compounds and partially esterificated compounds may be used. These polyhydric alcohols may be used singly or in combination of 2 or more members thereof. Among them, in the present invention, a polyhydric alcohol having a structure in which each of vicinal two carbon atoms is bonded with a hydroxyl group (for example, saccharides) is more preferably used, sorbitol or polyglycerol are particularly preferably used, and sorbitol is most preferably used.

In this connection, from the viewpoint not to inhibit performance of the cement dispersant, content of carboxyl group (including salt form thereof) contained in the polyhydric alcohol alkyleneoxide adduct is preferably not more than 0.02 mole, more preferably not more than 0.01 mole, further more preferably not more than 0.005 mole, and most preferably 0 mole to one mole of oxyalkylene group contained in said adduct.

As described above, "polyhydric alcohol alkyleneoxide adduct monomer" is one having a polymerizable **unsaturated** double bond among the polyhydric alcohol alkyleneoxide adducts. In other words, "polyhydric alcohol alkyleneoxide adduct monomer" is an unsaturated monomer having a structure in which an oxyalkylene group is bonded to a polyhydric alcohol residue.

Method for producing such polyhydric alcohol alkyleneoxide adduct monomer includes, for example, (1) a method of introducing an unsaturated group into a polyhydric alcohol compound added with an alkyleneoxide, (2) a method of reacting one mole or more glycidol to one mole of an unsaturated alcohol or an unsaturated alcohol polyalkyleneglycol adduct to generate 3 or more hydroxyl groups in a molecule, followed by addition reaction of alkyleneoxide thereto.

In the above method (1), as a method for introducing an unsaturated group, the following methods are preferably used: a method of introducing an unsaturated group by esterification or ester exchange of a hydroxyl group possessed by a polyhydric alcohol compound added with alkyleneoxide with an unsaturated compound, for example, (meth) acrylic acid and alkyl (meth)acrylate esters such as methyl (meth) acrylate; a method of introducing an unsaturated group by reacting an epoxy compound having 2 to 5 carbon atoms such as glycidyl (meth)acrylate and (meth)allyl glycidyl ether to a hydroxyl group possessed by a polyhydric alcohol compound added with alkyleneoxide; and a method of introducing an unsaturated group by etherification of the above-described hydroxyl group with a halide of alkenyl compound having 2 to 5 carbon atoms such as (meth)allyl chloride. As an unsaturated compound to be used for introducing an unsaturated group, the following compounds are preferably used: unsaturated carboxylic acid such as (meth)acrylic acid, maleic acid, fumaric acid and citraconic acid; unsaturated carboxylic acid anhydride such as (meth)acrylic anhydride and maleic anhydride; halogenide of unsaturated carboxylic acid such as (meth) acrylyl chloride; unsaturated carboxylic acid ester such as alkyl (meth)acrylate ester having 1 to 30 carbon atoms, maleic acid monoester having 1 to 30 carbon atoms, maleic acid diester having 1 to 30 carbon atoms; and epoxy compound such as glycidyl (meth)acrylate and (meth)allyl glycidyl ether. These compounds may be used singly or in combination of 2 or more members thereof. In particular, as an unsaturated group of alkenyl compound type, an unsaturated group having 4 ormore carbon atoms is preferable, and an unsaturated group having 5 or more carbon atoms is more preferable. Also, methallyl group and isoprenyl group (3-methyl-3-butenyl group) are more preferable than allyl group. Further, (meth) acryloyl group can be also preferably used.

In the above-described method (2), as an unsaturated alcohol, the following alcohols are preferably used: vinyl alcohol, (meth)allylalcohol, 3-buten-1-ol, isoprenealcohol (3-methyl-3-buten-1-ol), 3-methyl-3-buten-2-ol, 3-methyl-2-buten-1-ol, 2-methyl-3-buten-2-ol, 2-methyl-2-buten-1-ol and 2-methyl-3-buten-1-ol. Further, as an unsaturated alcohol polyalkyleneglycol adduct, a compound having a structure in which a polyalkyleneglycol chain is added to the above-described unsaturated alcohol can be used.

The polyhydric alcohol alkyleneoxide adduct monomer has a group formed by one oxyalkylene group or a group formed by adding 2 or more oxyalkylene groups (polyalkyleneglycol chain) . In the group formed by adding 2 or more oxyalkylene groups, an oxyalkylene group forming said group may be of one kind or of 2 or more kinds. When said group is formed by 2 or more kinds of oxyalkylene groups, addition mode of 2 or more kinds of oxyalkylene groups may be any of random addition, block addition, alternate addition, and the like. When a plurality of the above groups formed by oxyalkylene group are present in a molecule, these groups may be the same or different from each other.

Examples of the oxyalkylene group include groups derived from compounds such as ethyleneoxide (EO), propyleneoxide (PO), isobutyleneoxide, 1-buteneoxide, 2-buteneoxide, trimethylethyleneoxide, tetramethyleneoxide, tetramethylethyleneoxide, butadienemonooxide, octyleneoxide, styreneoxide and 1,1-diphenylethyleneoxide.

Group formed by the oxyalkylene group is preferably a group in which oxyethylene group (-O-CH₂-CH₂-) is a main component. In this case, "oxyethylene group is a main component" means that when 2 or more kinds of oxyalkylene groups are present in a monomer, the oxyethylene group occupies majority of the total oxyalkylene groups present. By this, a polycarboxylic acid type copolymer obtained by copolymerizing the polyhydric alcohol alkyleneoxide adduct monomer has an improved hydrophilic property leading to sufficient exertion of the effect thereof.

In the oxyalkylene group, when "oxyethylene group is a main component" is expressed in % by mole of oxyethylene group in the total oxyalkylene groups being 100% by mole, content of the oxyethylene group is preferably 50 to 100% by mole. When content of the oxyethylene group is less than 50% by mole, hydrophilic property of a group formed from the oxyalkylene group could be lowered. Content of the oxyethylene group is more preferably not less than 60% by mole, further more preferably not less than 70% by mole, particularly preferably not less than 80% by mole, and most preferably not less than 90% by mole.

Average addition mole number of oxyalkylene group in the polyhydric alcohol alkyleneoxide adduct monomer is preferably over 0 and not more than 300 to one mole of hydroxyl group (-OH group). When the number is over 300, polymerizability of said monomer could be lowered. The above average addition mole number is more preferably not less than 1, further more preferably not less than 2, particularly preferably not less than 6, and most preferably not less than 12. In addition, the number is more preferably not more than 270, further more preferably not more than 250, particularly preferably not more than 220, and most preferably not more than 200. When the average addition mole number is out of the range, the effect of the polycarboxylic acid type copolymer of improving fluidity of cement composition or the like could not be sufficiently exerted. In this connection, "average addition mole number of oxyalkylene group in the polyhydric alcohol alkyleneoxide adduct monomer" means an average mole number of the oxyalkylene group added to one mole of a group formed by the oxyalkylene group possessed by the polyhydric alcohol alkyleneoxide adduct monomer, or an average mole number of the oxylalkylene group added to one mole of hydroxyl group possessed by the polyhydric alcohol to form the polyhydric alcohol alkyleneoxide adduct monomer.

In the polyhydric alcohol alkyleneoxide adduct monomer, at least one terminal group of oxyalkylene group having a structure bonding to polyhydric alcohol residue is preferably a hydroxyl group. More preferably, all terminal groups of oxyalkylene group are hydroxyl groups. This is because the following reason. That is, if the terminal group of oxyalkylene group is an alkyl group, the polycarboxylic acid type copolymer obtained by copolymerizing with the polyhydric alcohol alkyleneoxide adduct monomer could lower water reducing property when the copolymer is used as a cement admixture.

Weight average molecular weight of the polyhydric alcohol alkyleneoxide adduct monomer is not particularly limited, but preferably 500 to 500,000, more preferably not less than 1, 000, further more preferably not less than 5, 000, particularly preferably not less than 8,000, and most preferably not less than 10, 000. Further the weight average molecular weight is more preferably not more than 300,000, further more preferably not more than 200, 000, particularly preferably not more than 100,000, and most preferably not more than 80,000. In this connection, as a value of weight average molecular weight of the polyhydric alcohol alkyleneoxide adduct monomer, a value obtained by GPC under the measuring conditions described in the section of the first embodiment can be employed.

The polycarboxylic acid type copolymer composing the powder cement dispersant of the present embodiment contains, as essential components, the repeating unit (I-a) represented by the Chemical Formula 1, the repeating unit (II-a) represented by the Chemical Formula 2 and the repeating unit (iii) derived from the polyhydric alcohol alkyleneoxide adduct monomer, but another repeating unit may be contained. As a monomer forming another repeating unit, the mode explained in the first embodiment can be similarly employed. Therefore, detailed explanation thereof is omitted.

However, to obtain a cement dispersant, which has superior dispersibility and easiness in pulverization in production, preferably the above-described 3 essential repeating units are major repeating units in the polycarboxylic acid type copolymer. Specifically, the above-described 3 essential repeating units are contained preferably in 80 to 100%, and more preferably in 90 to 100%, based on the total number of the repeating units in the polycarboxylic acid type copolymer.

In the polycarboxylic acid type copolymer, which is a main component of the powdery cement dispersant of the present embodiment, ratio of contents of the repeating unit (I-a) represented by the Chemical Formula 1, the repeating unit (II-a) represented by the Chemical Formula 2 and the repeating unit (iii) derived from the polyhydric alcohol alkyleneoxide adduct monomer is not particularly limited, and can be determined, as appropriate, considering desired dispersibility, etc., but the ratio of contents is preferably (I-a) / (II-a) / (iii) = (40 to 90) / (5 to 30) / (5 to 50) % by weight, more preferably (I-a) / (II-a) / (iii) = (50 to 90) / (5 to 30) / (5 to 40) % by weight, and further more preferably (I-a) / (II-a) / (iii) = (60 to 80) / (10 to 20) / (10 to 30) % by weight. When content of each component in the polycarboxylic acid type copolymer is a value in the range, it is preferable in that the cement dispersant is superior in dispersibility. In this connection, as a value of content of these repeating units, a value measured by a technique such as NMR and acid value measurement is employed.

Preferable modes of weight average molecular weight and average particle size of the powdery cement dispersant of the present embodiment are the same to the preferable modes in the first embodiment. Therefore, detailed explanation thereof is omitted here.

Method for producing the powdery cement dispersant of the present embodiment is also not particularly limited, the procedure explained in the section of the first embodiment can be similarly used except that the PAI/PAO adduct monomer is replaced by the polyhydric alcohol alkyleneoxide adduct monomer. Therefore, detailed explanation thereof is omitted here.

### Fourth Embodiment

The present embodiment is different from the first embodiment and similar to the second embodiment in that the repeating unit (I) derived from an unsaturated polyalkyleneglycol type monomer is represented by the following Chemical Formula 3 (hereinafter, the repeating unit represented by the following Chemical Formula 3 is also referred to as "repeating unit (I-b)"), and the repeating unit (II) derived from an unsaturated carboxylic acid type monomer is represented by the following Chemical Formula 4 (hereinafter, the repeating unit represented by the following Chemical Formula 4 is also referred to as "repeating unit (II-b)"). On the other hand, the present embodiment is different from the first embodiment and similar to the third embodiment in that the branched compound constituting the repeating unit (III) derived from a branched compound monomer is a polyhydric alcohol alkyleneoxide adduct. 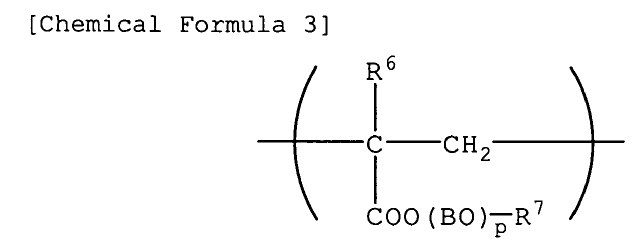 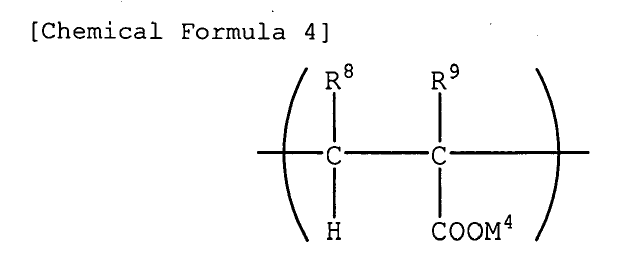 wherein R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and is 2 to 300, R⁸ represents a hydrogen atom or a methyl group, R⁹ represents a hydrogen atom, a methyl group or -CH₂COOM⁵, each of M⁴ and M⁵ independently represents a hydrogen atom, a metal atom, ammonium group or an organic amine group.

Namely, the powdery cement dispersant of the present embodiment contains, as a main component, a polycarboxylic acid type copolymer in which a polycarboxylic acid type polymer having a polyalkyleneoxide moiety but different structure from that in the third embodiment is copolymerized with a polyhydric alcohol alkyleneoxide adduct monomer. In other words, the polycarboxylic acid type copolymer which is a main component of the present embodiment is similar to the third embodiment in that the copolymer has a repeating unit (iii) derived from a polyhydric alcohol alkyleneoxide adduct monomer, but structures of other repeating units of the polycarboxlic acid type copolymer which is a main component of the cement dispersant are different from those in the third embodiment, and said polymer contains the repeating unit (I-b) represented by the Chemical Formula 3 and the repeating unit (II-b) represented by the Chemical Formula 4. In this connection, specific modes of the "repeating unit (I-b)" and the "repeating unit (II-b)" in the present embodiment are similar to those in the second embodiment, and specific mode of the "repeating unit (iii) derived from a polyhydric alcohol alkyleneoxide adduct monomer" is similar to that of the third embodiment. Therefore, detailed explanation thereof is omitted here.

The polycarboxylic acid type copolymer composing the powdery cement dispersant of the present embodiment contains, as essential components, the repeating unit (I-b) represented by the Chemical Formula 3, the repeating unit (II-b) represented by the Chemical Formula 4, and the repeating unit (iii) derived from polyhydric alcohol alkyleneoxide adduct monomer, but another repeating unit may be further contained. In this connection, specific mode of the monomer forming another repeating unit is similar to "another monomer" in the polycarboxylic acid type copolymer, which is a main component of the cement dispersant of the first embodiment. Therefore, detailed explanation thereof is omitted here.

In this connection, repeating units (I-a), (II-a), (III) and another repeating unit, or repeating units (I-b), (II-b), (III) and another repeating unit may be copolymerized in a block form or copolymerized randomly.

Here, to obtain a cement dispersant, which has superior dispersibility and easiness in pulverization in production, preferably the above-described 3 essential repeating units are major repeating units in the polycarboxylic acid type copolymer. Specifically, the above-described 3 essential repeating units are contained preferably in 80 to 100%, and more preferably in 90 to 100%, based on the total number of the repeating units in the polycarboxylic acid type copolymer.

In the polycarboxylic acid type copolymer, which is a main component of the powdery cement dispersant of the present embodiment, ratio of contents of the repeating unit (I-b) represented by the Chemical Formula 3, the repeating unit (II-b) represented by the Chemical Formula 4 and the repeating unit (iii) derived from the polyhydric alcohol alkyleneoxide adduct monomer is not particularly limited, and can be determined, as appropriate, considering desired dispersibility, etc., but preferable mode thereof is similar to the case of the repeating unit (I-a), the repeating unit (II-a) and the repeating unit (iii) in the third embodiment. Therefore, detailed explanation thereof is omitted here.

Preferable modes of weight average molecular weight and average particle size of the powdery cement dispersant of the present embodiment are similar to the preferable modes in the third embodiment. Therefore, detailed explanation thereof is omitted here.

Method for producing the powdery cement dispersant of the present embodiment is also not particularly limited, and the procedure explained in the section of the first embodiment can be similarly used except that the monomers forming the repeating units represented by the Chemical Formulae 1 and 2 are replaced by the monomers forming the repeating units represented by the Chemical Formulae 3 and 4, and the PAI/PAO adduct monomer is replaced by the polyhydric alcohol alkyleneoxide adduct monomer. Therefore, detailed explanation thereof is omitted here.

As described above, the powdery cement dispersant concerning one aspect of the present invention was specifically explained exemplifying the first embodiment to the forth embodiment, but the technical scope of the powdery cement dispersant concerning said aspect should not be limited only to said embodiments. For example, in the above-described embodiments, a mode in which instead of the repeating unit (I-a) represented by the Chemical Formula 1 and the repeating unit (I-b) represented by the Chemical Formula 3, a repeating unit (I) derived from an unsaturated polyalkyleneglycol type monomer other than these is contained, or a mode in which instead of the repeating unit (II-a) represented by the Chemical Formula 2 and the repeating unit (II-b) represented by the Chemical Formula 4, a repeating unit (II) derived from an unsaturated carboxylic acid type monomer other than these is contained can also be included in the technical scope of the powdery cement dispersant concerning said aspect. Further, specific modes of the repeating unit (I) and the repeating unit (II) other than the mode described in detail in the above-described embodiments are not particularly limited, and can be suitably used for the powdery cement dispersant of the present embodiment referring to conventionally well-known knowledge, as appropriate. For example, specific mode of a repeating unit (I) includes an ester of itaconic acid and polyalkyleneglycol.

Another aspect of the present invention relates to a powdery cement dispersant comprising a polycarboxylic acid type copolymer (A) having a repeating unit (IV) derived from an unsaturated polyalkyleneglycol type monomer and a repeating unit (V) derived from an unsaturated carboxylic acid type monomer, and a branched compound (B) havingabranched structure containing 3 or more polyalkyleneimine chain or polyoxyalkylene chain in a molecule.

Hereinbelow, said aspect will be explained by classifying to several embodiments depending on types of the branched compound (B).

### Fifth Embodiment

The present embodiment is a powdery cement dispersant comprising a polycarboxylic acid type copolymer (A) represented by the following Chemical Formula 5 or the following Chemical Formula 6 and having a repeating unit (IV) derived from an unsaturated polyalkyleneglycol type monomer (hereinafter, a repeating unit (IV) derived from an unsaturated polyalkyleneglycol type monomer on the left side in the Chemical Formula 5 is also referred to as "IV-a", and a repeating unit (IV) derived from an unsaturated polyalkyleneglycol type monomer on the left side in the Chemical Formula 6 is also referred to as "IV-b") and a repeating unit (V) derived from an unsaturated carboxylic acid type monomer (hereinafter, a repeating unit (V) derived from an unsaturated carboxylic acid type monomer on the right side in the Chemical Formula 5 is also referred to as "V-a", and a repeating unit (V) derived from an unsaturated carboxylic acid type monomer on the right side in the Chemical Formula 6 is also referred to as "V-b"), and a PAI/PAO adduct (B). In this connection, in the following explanation, a polycarboxylic acid type copolymer having a repeating unit represented by the Chemical Formula 5 is also referred to as "copolymer (A-a) ", and a polycarboxylic acid type copolymer having a repeating unit represented by the Chemical Formula 6 is also referred to as "copolymer (A-b)". 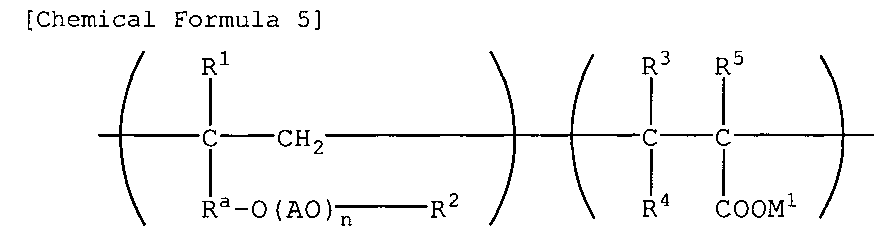 wherein, R¹ represents a hydrogen atom or a methyl group, R² represents a hydrogen atom or a hydrocarbon group having 1 to 30 carbon atoms, each of AO independently represents an oxyalkylene group having 2 to 18 carbon atoms, R^{a} represents an alkylene group having 0 to 2 carbon atoms, n represents an average addition mole number of an oxyalkylene group and is 2 to 300, each of R³ and R⁴ independently represents a hydrogen atom, a methyl group or -COOM² (provided that a case where both of R³ and R⁴ are -COOM² is excluded), R⁵ represents a hydrogen atom, a methyl group or -CH₂COOM³ (provided that when R⁵ is -CH₂COOM³, each of R³ and R⁴ independently represents a hydrogen atom or a methyl group), and each of M¹, M² and M³ independently represents a hydrogen atom, a metal atom, an ammonium group or an organic amine group. 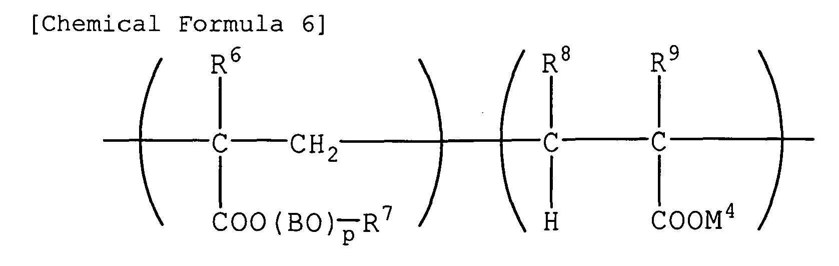 wherein, R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and is 2 to 300, R⁸ represents a hydrogen atom or a methyl group, R⁹ represents a hydrogen atom, a methyl group or -CH₂COOM⁵, each of M⁴ and M⁵ independently represents a hydrogen atom, a metal atom, ammonium group or an organic amine group.

Namely, the powdery cement dispersant of the present embodiment contains a polycarboxylic acid type copolymer having a specific structure with a polyalkyleneoxide moiety and a PAI/PAO adduct (for example, these are mixed). In this connection, the powdery cement dispersants of the above-described first embodiment and second embodiment contains, as a main component, a polycarboxylic acid type copolymer in which a PAI/PAO adduct monomer is copolymerized in a polycarboxylic acid type copolymer having a prescribed structure. Contrary, the powdery cement dispersant of the present embodiment is different from those in the first embodiment and the second embodiment in that the above-described prescribed polycarboxylic acid type copolymer and the PAI/PAO adduct are contained without through a covalent bond (mixed).

Hereinbelow, each of the polycarboxylic acid type copolymer (A) and the PAI/PAO adduct (B) in the present embodiment will be explained in detail.

### Polycarboxylic Acid Type Copolymer (A)

The polycarboxylic acid type copolymer (A) to be used in the powdery cement dispersant of the present embodiment has a repeating unit represented by the Chemical Formula 5 or the Chemical Formula 6.

Firstly, the polycarboxylic acid type copolymer (A-a) having a repeating unit represented by the Chemical Formula 5 (that is, a repeating unit (IV-a) and a repeating unit (V-a)) will be explained.

The repeating unit (IV-a) on the left side in the Chemical Formula 5 is similar to the repeating unit (I-a) represented by the Chemical Formula 1 in the first embodiment. Further, the repeating unit (V-a) on the right side in the Chemical Formula 5 is similar to the repeating unit (II-a) represented by the Chemical Formula 2 in the first embodiment. Therefore, detailed explanation thereof is omitted here.

Ratio of contents of (IV-a) and (V-a) in the Chemical Formula 5 is not particularly limited. However, in order to obtain well-balanced adsorption performance by a carboxyl group and dispersibility by a polyoxyalkylene chain, ratio of the total number of the repeating unit (IV-a) : the total number of the repeating unit (V-a) is preferably 1:0.1 to 1:50, more preferably 1:0.5 to 1:20, and further more preferably 1:1 to 1:4.

In the polycarboxylic acid type copolymer (A-a) having the repeating unit represented by the Chemical Formula 5, in addition to the repeating unit (IV-a) and the repeating unit (V-a), another repeating unit may be contained. In this connection, specific mode of a monomer forming another repeating unit is similar to "another monomer" in the polycarboxylic acid type copolymer, which is a main component of the cement dispersant of the first embodiment. Therefore, detailed explanation thereof is omitted here. Furtehr, branched compound monomers such as "PAI/PAO adduct monomer" used in the first and second embodiments described above and "polyhydric alcohol alkyleneoxide adduct monomer" used in the third and fourth embodiments described above may be used as the "another monomer" composing the polycarboxylic acid type copolymer in the present embodiment.

Further, in the polycarboxylic acid type copolymer (A-a) having the repeating unit represented by the Chemical Formula 5, the repeating unit (IV-a), the repeating unit (V-a) and the another repeating unit may be copolymerized in a block form or copolymerized randomly.

In this connection, in order to obtain a cement dispersant, which has superior dispersibility and easiness in pulverization in production, two repeating units represented by the Chemical Formula 5 (that is, the repeating unit (IV-a) and the repeating unit (V-a)) are preferably major repeating units in the polycarboxylic acid type copolymer (A-a) having the repeating units represented by the Chemical Formula 5. Specifically, the two repeating units represented by the Chemical Formula 5 are contained preferably in 80 to 100%, and more preferably in 90 to 100%, based on the total number of all repeating units in the copolymer (A-a).

Weight average molecular weight of the polycarboxylic acid type copolymer (A-a) having the repeating unit represented by the Chemical Formula 5 is, from the viewpoint of superior fluidity, preferably 1,000 to 500,000, and more preferably 5,000 to 100,000 in converted value to polyethyleneglycol. In this connection, for measuring a value of said weight average molecular weight, the method described later in Example is used.

Next, the polycarboxylic acid type copolymer (A-b) having the repeating unit represented by the Chemical Formula 6 will be explained.

The repeating unit (IV-b) on the left side in the Chemical Formula 6 is similar to the repeating unit (I-b) represented by the Chemical Formula 3 in the second embodiment. Further, the repeating unit (V-b) on the right side in the Chemical Formula 6 is similar to the repeating unit (II-b) represented by the Chemical Formula 4 in the second embodiment. Therefore, detailed explanation thereof is omitted here.

Ratio of contents of the repeating unit (IV-b) and the repeating unit (V-b) in the Chemical Formula 6 is not particularly limited. However, in order to obtain well-balanced adsorption performance by a carboxyl group and dispersibility by a polyoxyalkylene chain, ratio of the total number of the repeating unit (IV-b) : the total number of the repeating unit (V-b) is preferably 1:0.1 to 1:50, more preferably 1:0.5 to 1:20, and further more preferably 1:1 to 1:4.

In the polycarboxylic acid type copolymer (A-b) having the repeating unit represented by the Chemical Formula 6, in addition to the repeating unit (IV-b) and the repeating unit (V-b), another repeating unit may be contained. In this connection, specific mode of a monomer forming another repeating unit is similar to "another monomer" in the polycarboxylic acid type copolymer, which is a main component of the cement dispersant of the first embodiment. Therefore, detailed explanation thereof is omitted here.

Further, in the polycarboxylic acid type copolymer (A-b) having the repeating unit represented by the Chemical Formula 6, the repeating unit (IV-b), the repeating unit (V-b) and the another repeating unit may be copolymerized in a block form or copolymerized randomly.

In this connection, in order to obtain a cement dispersant, which has superior dispersibility and easiness in pulverization in production, two repeating units represented by the Chemical Formula 6 (that is, the repeating unit (IV-b) and the repeating unit (V-b)) are preferably major repeating units in the polycarboxylic acid type copolymer (A-b) having the repeating units represented by the Chemical Formula 6. Specifically, the two repeating units represented by the Chemical Formula 6 ((IV-b) and (V-b)) are contained preferably in 80 to 100%, and more preferably in 90 to 100%, based on the total number of all repeating units in the copolymer (A-b) .

Weight average molecular weight of the polycarboxylic acid type copolymer (A-b) having the repeating unit represented by the Chemical Formula 6 is, from the viewpoint of superior fluidity, preferably 1,000 to 500,000, and more preferably 5,000 to 100,000 in a converted value to polyethyleneglycol. In this connection, for measuring a value of said weight average molecular weight, the method described later in Example is used.

In the powdery cement dispersant of the present embodiment, as a polycarboxylic acid type copolymer which is a main component, any one of the copolymer (A-a) having the repeating unit represented by the Chemical Formula 5 and the copolymer (A-b) having the repeating unit represented by the Chemical Formula 6 may be used, or both of the copolymers may be used in combination. In this connection, from the viewpoint of obtaining a cement dispersant with superior dispersiblity, the powdery cement dispersant of the present embodiment preferably contains at least the copolymer having the repeating unit represented by the Chemical Formula 6.

Method for producing the polycarboxylic acid type copolymer (A) in the powdery cement dispersant of the present embodiment is not particularly limited. Said copolymer (A) can be synthesized by referring to conventionally well-known knowledge. The copolymer may be synthesized based on newly obtained knowledge. In this case, as raw materials, monomers corresponding to the repeating units may be prepared.

### PAI/PAO Adduct (B)

The powdery cement dispersant of the present embodiment contains, in addition to the above-described polycarboxylic acid type copolymer (A), a PAI/PAO adduct (B).

In the present embodiment, the "PAI/PAO adduct (B)" contained in the powdery cement dispersant is a compound in which alkyleneoxide is added to polyalkyleneimine, and has the similar form to the "PAI/PAO adduct monomer" except that a polymerizable unsaturated double bond is not necessarily present. Therefore, detailed explanation thereof is omitted here.

In this connection, ratio of contents of the polycarboxylic acid type copolymer (A) and the PAI/PAO adduct (B) in the powdery cement dispersant of the present embodiment is preferably (A) / (B) = (50 to 98) / (2 to 50) % by weight, more preferably (A) / (B) = (50 to 95) / (5 to 50) % by weight, further more preferably (A) / (B) = (60 to 90) / (10 to 40) % by weight, and particularly preferably (A) / (B) = (70 to 85) / (15 to 30) % by weight, based on the total content of these components as 100% by weight. When content of each component in the powdery cement dispersant of the present embodiment is a value in such range, it is preferable in that the dispersant can have superior dispersibility. In this connection, as a value of content of each component, a value measured by a technique such as NMR and acid value measurement is employed.

Preferable mode of average particle size of the powdery cement dispersant of the present embodiment is similar to the preferable mode in the first embodiment. Therefore, detailed explanation thereof is omitted here.

Method for producing the powdery cement dispersant of the present embodiment is exemplified, for example, by a method in which a carboxylic acid type copolymer (A-a) having the repeating unit represented by the Chemical Formula 5 and/or a polycarboxylic acid type copolymer (A-b) having the repeating unit represented by the Chemical Formula 6 and a PAI/PAO adduct (B) are prepared, respectively, and mixed, followed by drying the resultant mixture to pulverize.

In this case, mixing means to mix the polycarboxylic acid type copolymer (A) and the PAI/PAO adduct (B) and drying means to dry the resultant mixture are not particularly limited, and conventionally well-known knowledge concerning mixing and drying of polymer composition can be referred to, as appropriate, depending on property of the polymer. For drying means, the mode explained in the first embodiment can be similarly and preferably used.

### Sixth Embodiment

The present embodiment is a powdery cement dispersant comprising a polycarboxylic acid type copolymer (A) represented by the following Chemical Formula 5 or the following Chemical Formula 6 and having a repeating unit (IV) derived from an unsaturated polyalkyleneglycol type monomer and a repeating unit (V) derived froman unsaturated carboxylic acid type monomer, and a polyhydric alcohol alkyleneoxide adduct (C). 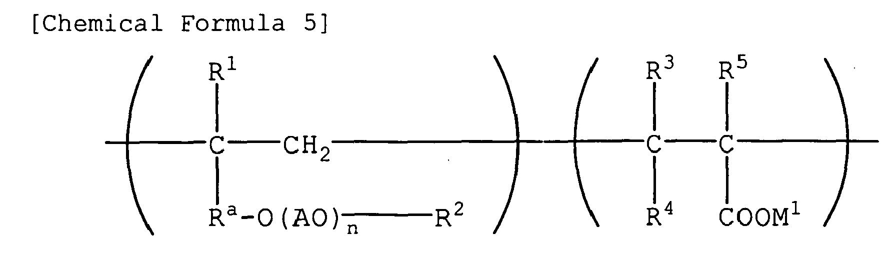 wherein R¹ represents a hydrogen atom or a methyl group, R² represents a hydrogen atom or a hydrocarbon group having 1 to 30 carbon atoms, AO represents each independently an oxyalkylene group having 2 to 18 carbon atoms, R^{a} represents an alkylene group having 0 to 2 carbon atoms, n represents an average addition mole number of the oxyalkylene group and being 2 to 300, each of R³ and R⁴ represents independently a hydrogen atom, a methyl group or -COOM² (provided that a case where both of R³and R⁴ are -COOM² is excluded), R⁵ represents a hydrogen atom, a methyl group or -Ch₂COOM³ (provided that when R⁵ is -CH₂COOM³, each of R³ and R⁴ represents independently a hydrogen atom or a methyl group), and each of M¹, M² and M³ represents independently a hydrogen atom, a metal atom, an ammonium group or an organic amine group. 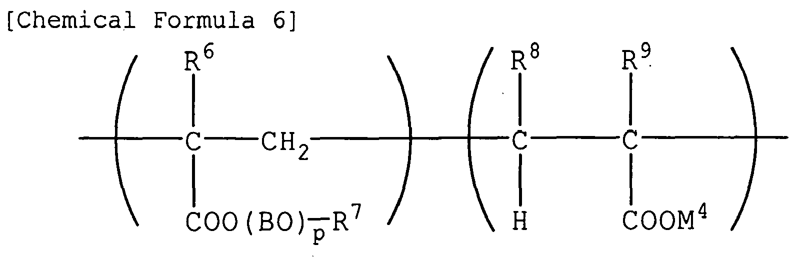 wherein R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and being 2 to 300, R⁸ represents a hydrogen atom or a methyl group, R⁹ represents a hydrogen atom, a methyl group or -CH₂COOM⁵, each of M⁴ and M⁵ independently represents a hydrogen atom, a metal atom, ammonium group or an organic amine group.

Namely, the powdery cement dispersant of the present embodiment contains a polycarboxylic acid type polymer having a specific structure with a polyalkyleneoxide moiety and a polyhydric alcohol alkyleneoxide adduct (for example, these components are mixed). Here, the powdery cement dispersant in the third embodiment and the fourth embodiment contains, as a main component, a polycarboxylic acid type copolymer in which a polyhydric alcohol alkyleneoxide adduct monomer is copolymerized in a polycarboxilic acid type polymer having a prescribed structure. Contrary, the powdery cement dispersant of the present embodiment is different from the third embodiment and the fourth embodiment in that the above-described prescribed polycarboxylic acid type polymer and the polyhydric alcohol alkyleneoxide adduct are contained without through a covalent bond (mixed).

Specific mode of the polycarboxylic acid type copolymer (A) in the present embodiment is similar to that of the fifth embodiment. Therefore, detailed explanation thereof is omitted here.

### Polyhydric Alcohol Alkyleneoxide Adduct (C)

The powdery cement dispersant of the present embodiment contains, in addition to the above-described polycarboxylic acid type copolymer (A), a polyhydric alcohol alkyleneoxide adduct (C).

In the present embodiment, "polyhydric alcohol alkyleneoxide adduct (C)" contained in the powdery cement dispersant is a compound having a structure in which an oxyalkylene group is added to a polyhydric alcohol residue, and has the similar form to the "polyhydric alcohol alkyleneoxide adduct monomer" except that a polymerizable unsaturated double bond is not necessarily present. Therefore, detailed explanation thereof is omitted here.

In this connection, ratio of contents of the polycarboxylic acid type copolymer (A) and the polyhydric alcohol alkyleneoxide adduct (C) in the powdery cement dispersant of the present embodiment is preferably (A) / (C) is preferably (A) / (C) = (50 to 98) / (2 to 50) % by weight, more preferably (A) / (C) = (50 to 95) / (5 to 50) % by weight, further more preferably (A) / (C) = (60 to 90) / (10 to 40) % by weight, and particularly preferably (A) / (C) = (70 to 85) / (15 to 30) % by weight, based on the total content of these components as 100% by weight. When content of each component in the powdery cement dispersant of the present embodiment is a value in such range, it is preferable in that the dispersant can have superior dispersibility. In this connection, as a value of content of each component, a value measured by a technique such as NMR and acid value measurement is employed.

Preferable mode of average particle size of the powdery cement dispersant of the present embodiment is similar to preferable mode in the first embodiment. Therefore, detailed explanation thereof is omitted here.

Method for producing the powdery cement dispersant of the present embodiment is exemplified, for example, by a method in which a carboxylic acid type copolymer (A-a) having the repeating unit represented by the Chemical Formula 5 and/or a polycarboxylic acid type copolymer (A-b) having the repeating unit represented by the Chemical Formula 6 and a polyhydric alcohol alkyleneoxide adduct (C) are prepared, respectively, and mixed, followed by drying the resultant mixture to pulverize.

In this case, mixing means to mix the polycarboxylic acid type copolymer (A) and the polyhydric alcohol alkyleneoxide adduct (C) and drying means to dry the resultant mixture are not particularly limited, and conventionally well-known knowledge concerning mixing and drying of polymer composition can be referred to, as appropriate, depending on property of the polymer. For drying means, the mode explained in the first embodiment can be similarly and preferably used.

As described above, the powdery cement dispersant concerning one aspect of the present invention was specifically explained exemplifying the fifth embodiment and the sixth embodiment, but the technical scope of the powdery cement dispersant concerning said aspect should not be limited only to said embodiments. For example, in the above-described fifth and sixth embodiments, a mode in which instead of the polycarboxylic acid type copolymer (A-a) having the repeating unit represented by the Chemical Formula 5 and the polycarboxylic acid type copolymer (A-b) having the repeating unit represented by the Chemical Formula 6, a polycarboxylic acid type copolymer (A) having a repeating unit other than these is contained, can also be included in the technical scope of the powdery cement dispersant concerning the present mode. Further, specific mode of the polycarboxylic acid type copolymer (A) other than the mode described in detail in the above-described embodiment is not particularly limited, and conventionally well-known knowledge can be referred to, as appropriate, and suitably used for the present mode.

The above-described powdery cement dispersant of the present invention is used for the purpose of improving dispersibility of cement compositions such as cement paste, mortar and concrete by adding to these compositions. The dispersant can also be used for **ultra**-high strength concrete. In the cement composition, materials usually used such as cement, water, sand and coarse aggregate can be incorporated. In the cement composition, fine particles such as fly ash, blast-furnace slag, silica fume and lime stone may be added. In this connection, super-high strength concrete means a concrete which is generally so termed, that is, a concrete whose hardened material shows equivalent or higher strength compared with the conventional concrete even when ratio of water / cement is reduced compared with the conventional concrete. For example, super-high strength concrete is a concrete which has workability not to have a problem for usual use and of which hardened material has compressive strength of preferably not less than 60 N/mm², more preferably not less than 80 N/mm², further more preferably not less than 100 N/mm², still further more preferably not less than 120 N/mm², particularly preferably not less than 160 N/mm², and most preferably not less than 200 N/mm², even when ratio of water / cement is preferably not more than 25% by weight, more preferably not more than 20% by weight, further more preferably not more than 18% by weight, particularly preferably not more than 14% by weight, and most preferably not more than 12% by weight.

As the cement, Portland cement such as common, high early-strength, super early-strength, rapid hardening hydraulic, moderate-heat and white; mixed Portland cement such as alumina cement, fly ash cement, slag cement and silica cement are suitable. Amount of the cement to be incorporated and unit water quantity per 1 m³ of concrete are as follows. For example, for producing high durability and high-strength concrete, preferably unit water quantity is 100 to 185 kg/m³ and ratio of water / cement = 10 to 70%. More preferably, unit water quantity is 120 to 175 kg/m³ and ratio of water / cement = 20 to 65%.

When the powdery cement dispersant of the present invention is used, amount of the powdery cement dispersant of the present invention to be added to cement composition is preferably adjusted so that an amount of the powdery cement dispersant of the present invention becomes 0.01 to 1.0% by weight to 100% by weight of cement composition. When addition amount of the powdery cement dispersant is less than 0.01% by weight, performance thereof could be insufficient, and when the addition amount is over 1.0% by weight, economical efficiency thereof could be decreased without an improvement in dispersibility corresponding to increase in addition amount. Further, addition amount of the powdery cement dispersant is more preferably 0.05 to 0.5% by weight, and further more preferably 0 .1 to 0. 3% by weight to 100% by weight of cement composition. In this connection, the unit of % by weight means a value reduced to solid content.

The powdery cement dispersant of the present invention is added to a cement composition, and the powdery cement dispersant of the first to the sixth embodiment of the present invention may be added to a cement composition in combination of 2 or more members thereof. In the cement composition, another additive may be incorporated. For example, in addition to the powdery cement dispersant of the present invention, another cement dispersant, air-entraining agent, cement moistening agent, swelling agent, waterproof agent, retardant, quick-setting agent, water-soluble polymer material, thickening agent, flocculating agent, dry shrinkage reducing agent, strength enhancing agent, hardening accelerator, antifoaming agent, and the like can be added in a cement composition.

Suitable embodiment of a combination of the powdery cement dispersant of the present invention and another additive includes the following (1) to (7).
(1) Combination containing, as essential components, <1> the powdery cement dispersant of the present invention and <2> oxyalkylene type antifoaming agent. As an oxyalkylene type antifoaming agent, polyoxyalkylenes, polyoxyalkylene alkyl ethers, polyoxyalkylene acetylene ethers, polyoxyalkylene alkylamines, and the like can be used. Among them,polyoxyalkylene alkylamines are particularly suitable. Incorporating ratio by weight of <2> oxyalkylene type antifoaming agent is preferably in a range of 0.01 to 20% by weight to 100% by weight of <1> the powdery cement dispersant.
(2) Combination containing, as essential components, 3 components of <1> the powdery cement dispersant of the present invention, <2> oxyalkylene type antifoaming agent and <3> AE agent. As an oxyalkylene type antifoaming agent, polyoxyalkylenes, polyoxyalkylene alkyl ethers, polyoxyalkylene acetylene ethers, polyoxyalkylene alkylamines, and the like can be used. Among them, polyoxyalkylene alkylamines are particularly suitable. As an AE agent, rasinate soap, alkylsulfonate esters and alkyl phosphate esters are particularly suitable. Incorporating ratio by weight of <2> oxyalkylene type antifoaming agent is preferably in a range of 0.01 to 20% by weight to 100% by weight of <1> the powdery cement dispersant. Incorporating ratio by weight of <3> AE agent is preferably in a range of 0. 001 to 2% by weight to 100% by weight of cement composition.
(3) Combination containing, as essential components, 3 components of <1> the powdery cement dispersant of the present invention, <2> a copolymer composed of a polyalkyleneglycol mono(meth)acrylate type monomer having a polyoxyalkylene chain added with an alkyleneoxide having 2 to 18 carbon atoms in an average addition mole number of 2 to 300, (meth) acrylic acid type monomer and a monomer copolymerizable with these monomers (disclosed in JP-B-59-18338, JP-A-7-223852, JP-A-9-241056, etc.), and <3> an oxyalkylene type antifoaming agent. Incorporating ratio by weight of <1> the powdery cement dispersant and <2> a copolymer is preferably in a range of 5/95 to 95/5 (powdery cement dispersant / copolymer), and more preferably in a range of 10/90 to 90/10. Incorporating ratio of <3> an oxyalkylene type antifoaming agent is preferably in a range of 0.01 to 20% by weight to 100% by weight in total of <1> the powdery cement dispersant and <2> a copolymer.
(4) Combination containing, as essential components, 2 components of <1> the powdery cement dispersant of the present invention and <2> a retardant. As a retardant, oxycarboxylic acids such as gluconic acid (salt thereof) and citric acid (salt thereof); sucharides such as glucose; sugar alcohols such as sorbitol; and phosphonic acids such as amino-tri-(methylenephosphonic acid) can be used. Incorporating ratio by weight of <1> the powdery cement dispersant and <2> a retardant is preferably in a range of 50/50 to 99.9/0.1 (powdery cement dispersant / retardant), and more preferably in a range of 70/30 to 99/1.
(5) Combination containing, as essential components, 2 components of <1> the powdery cement dispersant of the present invention and <2> a accelerator. As an accelerator, soluble calcium salts such as calcium chloride, calcium nitrite and calcium nitrate; chlorides such as ferric chloride and magnesium chloride; thiosulfate salts; formic acid; and formate salts such as calcium formate can be used. Incorporating ratio by weight of <1> the powdery cement dispersant and <2> an accelerator is preferably in a range of 10/90 to 99. 9/0 .1 (powdery cement dispersant / accelerator), and more preferably in a range of 20/80 to 99/1.
(6) Combination containing, as essential components, 2 components of <1> the powdery cement dispersant of the present invention and <2> a material separation reducing agent. As a material separation reducing agent, various thickening agents such as nonionic cellulose ethers and a compound having a hydrophobic substituent consisting of a hydrocarbon chain having 4 to 30 carbon atoms and a polyoxyalkylene chain added with an alkyleneoxide having 2 to 18 carbon atoms in an average addition mole number of 2 to 300 as partial structures, and the like can be used. Incorporating ratio by weight of <1> the powdery cement dispersant and <2> a material separation reducing agent is preferably in a range of 10/90 to 99.99/0.01 (powdery cement dispersant / material separation reducing agent), and more preferably in a range of 50/50 to 99.9/0.1. A cement composition having this combination is suitable for high-flow concrete, self-compacting concrete and self-leveling material.
(7) Combination containing, as essential components, 2 components of <1> the powdery cement dispersant of the present invention and <2> a sulfonic acid type dispersant having a sulfonic acid group in a molecule. As a sulfonic acid type dispersant, lignin sulfonate salt, naphthalenesulfonic acid - formalin condensate, melaminesulfonic acid - formalin condensate, polystyrenesulfonate salt, aminosulfonic acid type dispersant such as aminoarylsulfonic acid - phenol - formaldehyde condensate, and the like can be used. Incorporating ratio by weight of <1> the powdery cement dispersant and <2> a sulfonic acid type dispersant is preferably in a range of 5/95 to 95/5 (powdery cement dispersant / sulfonic acid type dispersant), and more preferably in a range of 10/90 to 90/10.

Method for preparing the concrete composition is not particularly limited, and the similar method to that for the conventional cement composition can be used. For example, a method by which the powdery cement dispersant of the present invention and cement are mixed, and other incorporating materials are further mixed, if necessary, followed by addition of water and mixing; a method by which a solution containing the cement dispersant is prepared by dissolving the cement dispersant of the present invention in advance, and the solution is added and mixed to a composition containing cement and other incorporating materials, and the like are included.

### Examples

Hereinafter, the present invention is explained in more detail by using Examples, but the technical scope of the present invention is not limited only to the following Examples. In this connection, in the Examples described below, measurement of weight average molecular weight of a polycarboxylic acid type copolymer was conducted by GPC under the measuring conditions described below.
Model of apparatus: Waters LCM1;
Detector: Waters 410 Differential Refraction Detector;
Analysis Software: Waters Millennium Ver. 2.18;
Eluent: Eluent prepared by dissolving 115.6 g of sodium acetate trihydrate in a mixture of 10, 999 g of water and 6,001 g of acetonitrile, and adjusting to pH 6 with a 30% sodium hydroxide aqueous solution;
Flow rate of eluent: 0.8 ml/min;
Column temperature: 35°C;
Column: TSKgel Guardcolumn SWXL + G4000SWXL + G3000SWXL + G2000SWXL produced from Tosoh Corp; and
Standard substance: Polyethylene glycol, weight average molecular weight (Mw): 272,500, 219,300, 85,000, 46,000, 24,000, 12,600, 4,250, 7,100 and 1,470.

### Production Example 1

### Synthesis of polycarboxylic acid type copolymer (1)

A glass-made reactor equipped with a thermometer, a stirrer, a dropping funnel, a nitrogen introduction pipe, and a reflux cooler was prepared. Into the reactor, 100.01 g of water was charged, and an inside of the reactor was replaced with nitrogen gas under stirring, then heated up to 80°C under a nitrogen atmosphere. When an internal temperature became stabilized at 80°C, 169.99 g of an aqueous monomer solution prepared by mixing 112.59 g of methoxypolyethyleneglycol monomethacrylate (an average addition mole number of ethylene oxide is 25; hereinafter, also referredto as "MPG25E") forming a repeating unit represented by the Chemical Formula 3, 22.41 g of methacrylic acid (hereinafter, also referred to as "MAA") forming a repeating unit represented by the Chemical Formula 4, 33.40 g of water, and 1.55 g of 3-mercaptopropionic acid, and 30 g of an aqueous solution prepared by dissolving 1.55 g of ammonium persulfate were added drop-wise into the reactor over 4 hours and 5 hours respectively. Thereafter, temperature was maintained successively at 80°C for one hour to complete the polymerization reaction.

After completion of the reaction, the mixture was subjected to a neutralization treatment with sodium hydroxide (degree of neutralization to carboxylic acid was 70%), and an aqueous solution (A) was obtained, in which a solid content (polycarboxylic acid type copolymer (1)) was adjusted at 40% by weight. Weight average molecular weight of the polycarboxylic acid type copolymer (1) contained in the resultant aqueous solution (A) was 23, 000. In this connection, the polycarboxylic acid type copolymer (1) was a polymer having the repeating unit represented by the Chemical Formula 3 and the repeating unit represented by the Chemical Formula 4.

### Production Example 2

### Synthesis of polycarboxylic acid type copolymer (2)

A glass-made reactor equipped with a thermometer, a stirrer, a dropping funnel, a nitrogen introduction pipe, and a reflux cooler was prepared. Into the reactor, 105.17 g of water was charged, and an inside of the reactor was replaced with nitrogen gas under stirring, then heated up to 80°C under a nitrogen atmosphere. When an internal temperature became stabilized at 80°C, 213.92 g of an aqueous monomer solution prepared by mixing 112.59 g of MPG25E forming a repeating unit represented by the Chemical Formula 3, 22.42 g of MAA forming a repeating unit represented by the Chemical Formula 4, 77.68 g of water, and 1.23 g of 3-mercaptopropionic acid, and 29.77 g of an aqueous solution prepared by dissolving 1.60 g of ammonium persulfate were added drop-wise into the reactor over 4 hours and 5 hours respectively. Thereafter, temperature was maintained successively at 80°C for one hour to complete the polymerization reaction.

After completion of the reaction, the mixture was subj ected to a neutralization treatment with sodium hydroxide (degree of neutralization to carboxylic acid was 70%), and an aqueous solution (B) was obtained, in which a solid content (polycarboxylic acid type copolymer (2)) was adjusted at 40% by weight. Weight average molecular weight of the polycarboxylic acid type copolymer (2) contained in the resultant aqueous solution (B) was 19, 000. In this connection, the polycarboxylic acid type copolymer (1) was a polymer having the repeating unit represented by the Chemical Formula 3 and the repeating unit represented by the Chemical Formula 4. Production Example 3

### Synthesis of polycarboxylic acid type copolymer (3)

By the similar procedures as in the Production Example 1 except that the neutralization treatment was conducted with calcium hydroxide instead of sodium hydroxide, an aqueous solution (C) was obtained in which the polycarboxylic acid type copolymer (3) was adjusted at 40% by weight. The polycarboxylic acid type copolymer (3) was also a polymer having the repeating unit represented by the Chemical Formula 3 and the repeating unit represented by the Chemical Formula 4.

### Production Example 4

### Synthesis of polycarboxylic acid type copolymer (4)

A glass-made reactor equipped with a thermometer, a stirrer, a dropping funnel, a nitrogen introduction pipe, and a reflux cooler was prepared. Into the reactor, 113.57 g of water and 112.59 g of 3-methyl-3-butene-1-ol / ethylene oxide adduct (an average addition mole number of an ethylene oxide is 50; hereinafter, also referred to as "IPN50") forming the repeating unit represented by the Chemical Formula 1, was charged, and an inside of the reactor was replaced with nitrogen gas under stirring, then heated to 60°C under a nitrogen atmosphere. When an internal temperature became stabilized at 60°C, 0.5 g of hydrogen peroxide was poured thereto. Thereafter, 18. 75 g of an aqueous monomer solution prepared by mixing 15.01 g of acrylic acid (hereinafter, also referred to as "AA") forming the repeating unit represented by the Chemical Formula 2, and 3.74 g of water, and 24.37 g of an aqueous solution prepared by dissolving 0.44 g of a 3-mercaptopropionic acid and 0.23 g of L-ascorbic acid, were added drop-wise into the reactor over 3 hours and 3.5 hours respectively. Thereafter, temperature was maintained at 60°C successively for one hour to complete the polymerization reaction.

After completion of the reaction, the mixture was subjected to a neutralization treatment with sodium hydroxide (degree of neutralization to carboxylic acid was 70%), and an aqueous solution (D) was obtained, in which a solid content (polycarboxylic acid type copolymer (4)) was adjusted at 40% by weight. Weight average molecular weight of the polycarboxylic acid type copolymer (4) contained in the resultant aqueous solution (D) was 34,000. In this connection, the polycarboxylic acid type copolymer (4) was a polymer having the repeating unit represented by the Chemical Formula 1 and the repeating unit represented by the Chemical Formula 2.

### Production Example 5

### Synthesis of polycarboxylic acid type copolymer (5)

By the similar procedures as in the Production Example 4 except that the neutralization treatment was conducted with calcium hydroxide instead of sodium hydroxide, an aqueous solution (E) was obtained, in which the polycarboxylic acid type copolymer (5) was adjusted at 40% by weight. The polycarboxylic acid type copolymer (5) was also a polymer having the repeating unit represented by the Chemical Formula 1 and the repeating unit represented by the Chemical Formula 2.

### Production Example 6

### Synthesis of a polyethyleneimine / ethyleneoxide adduct (PEIEO)

Into a pressure vessel equipped with a stirrer, a pressure gauge and a thermometer, 40 g of commercially available polyethyleneimine (a number average molecular weight thereof was 600, and an average addition mole number of ethyleneimine was 14) and 0.1 g of sodium hydride were charged, and temperature was raised up to 130°C. When an internal temperature became stabilized at 130°C, 818.4 g of ethylene oxide (an addition mole number thereof was 20) was added thereto over 8 hours, and after maturation at 130°C for 2 hours, temperature was allowed to decrease to obtain the polyethyleneimine / ethyleneoxide adduct (PEIEO).

### Production Example 7

### Synthesis of a polyethyleneimine / ethyleneoxide adduct macromer (PEIEOM)

A glass-made reactor equipped with a thermometer, a stirrer, a dropping funnel, a nitrogen introduction pipe, and a reflux cooling apparatus was prepared. Into the reactor, 500 g of PEIEO obtained in the Production Example 5 was charged, and an inside of the reactor was replaced with nitrogen gas under stirring, then heated to 90°C under a nitrogen atmosphere. The reaction system was maintained at 90°C, and 44.3 g of glycidyl methacrylate was added drop-wise thereto over one hour. After the completion of dropping, stirring was continued for one hour at 90°C to obtain the polyethyleneimine / ethyleneoxide adduct macromer (PEIEOM).

### Production Example 8

### Synthesis of a polyethyleneimine / alkyleneoxide adduct (PEIAO)

Into a pressure vessel equipped with a stirrer, a pressure gauge and a thermometer, 40 g of commercially available polyethyleneimine (a number average molecular weight thereof was 600, and an average addition mole number of ethyleneimine was 14) and 0.1 g of sodium hydride were charged, and temperature was raised up to 130°C. When an internal temperature became stabilized at 130°C, 324.8 g of propylene oxide (an addition mole number thereof was 6) was added thereto over 3 hours. After maturation at 130°C for 5 hours, 3285.3 g of ethylene oxide (an addition mole number thereof was 80) was added thereto over 12 hours, and after maturation at 130°C for 2 hours, temperature was allowed to decrease to obtain the polyethyleneimine / alkyleneoxide adduct (PEIAO).

### Production Example 9

### Synthesis of polyhydric alcohol alkyleneoxide adduct (1)

Into a pressure vessel equipped with a stirrer, a pressure gauge and a thermometer, 64 g of commercially available sorbitol and 0.20 g of sodium hydroxide were charged. Subsequently, temperature of the reaction system was raised up to 120°C or higher to melt sorbitol. Thereafter, 936 g of ethyleneoxide was added thereto, while the reaction system was maintained at 120 to 140°C, to obtain a compound in which active hydrogen atoms of sorbitol are added with 10 moles each of ethyleneoxide, respectively (hereinafter, also referred to as "SB600").

### Production Example 10

### Synthesis of polyhydric alcohol alkyleneoxide adduct (2)

Into a pressure vessel equipped with a stirrer, a pressure gauge and a thermometer, 517 g of SB600 obtained in the Production Example 9 and 0. 10 g of sodiumhydroxide were charged. Subsequently, after temperature of the reaction system was raised up, 483 g of ethyleneoxide was added thereto, while the reaction system was maintained at 120 to 140°C, to obtain a compound in which active hydrogen atoms of sorbitol were added with 20 moles each of ethyleneoxide, respectively (hereinafter, also referred to as "SB1200").

### Production Example 11

### Synthesis of polyhydric alcohol alkyleneoxide adduct (3)

Into a pressure vessel equipped with a stirrer, a pressure gauge and a thermometer, 176 g of SB600 obtained in the Production Example 9 and 0.16 g of sodium hydroxide were charged. Subsequently, after temperature of the reaction system was raised up, 824 g of ethyleneoxide was added thereto, while the reaction system was maintained at 120 to 140°C, to obtain a compound in which active hydrogen atoms of sorbitol were added with 60 moles each of ethyleneoxide, respectively (hereinafter, also referred to as "SB3600").

### Example 1-1

### Synthesis of the polycarboxylic acid type copolymer in the second embodiment, and preparation of an aqueous precursor solution of the cement dispersant of the second embodiment containing said copolymer

A glass-made reactor equipped with a thermometer, a stirrer, a dropping funnel, a nitrogen introduction pipe, and a reflux cooling apparatus was prepared. Into the reactor, 984.3 g of water was charged, and an inside of the reactor was replaced with nitrogen gas under stirring, then heated up to 80°C under a nitrogen atmosphere. When an internal temperature became stabilized at 80°C, 1251.2 g of an aqueous monomer solution prepared by mixing 625.55 g of MPG25E forming the repeating unit represented by the Chemical Formula 3, 166.0 g of methacrylic acid forming the repeating unit represented by the Chemical Formula 4, 208.5 g of PEIEOM obtained in the Production Example 7, 250.0 g of water and 1.24 g of 3-mercaptopropionic acid, and 200.0 g of a 10.4% by weight aqueous solution of ammonium persulfate were added drop-wise into the reactor over 2 hours. After completion of dropping, 50.0 g of a 10.4% by weight aqueous solution of ammonium persulfate was further added drop-wise into the reactor over 0.5 hour. Thereafter, temperature was maintained at 80°C successively for two hours to complete the polymerization reaction.

After completion of the reaction, the reaction system was subjected to a neutralization treatment with sodium hydroxide (degree of neutralization to carboxylic acid was 70%) to obtain an aqueous solution (1-1) in which 40% by weight of solid content (polycarboxylic acid type copolymer (6)) was contained. Weight average molecular weight of the polycarboxylic acid type copolymer (6) contained in the resultant aqueous solution (1-1) was 14,700. In this connection, the polycarboxylic acid type copolymer (6) was a polymer having the repeating unit represented by the Chemical Formula 3 and the repeating unit represented by the Chemical Formula 4.

Using the aqueous solution (1-1) obtained as described above, pulverization was attempted as described later to evaluate whether the solution was pulverizable or not.

### Example 1-2

### Preparation of an aqueous precursor solution of the cement dispersant of the fifth embodiment

To 50 g of the aqueous solution (A) obtained in the Production Example 1, 10 g of an aqueous solution containing 40% by weight of PEIEO obtained in the Production Example 6 was added and mixed until the reaction system became homogeneous, to obtain an aqueous solution (1-2) in which 40% by weight of solid content (polycarboxylic acid type copolymer (1) + PEIEO) was contained.

Using the aqueous solution (1-2) obtained as described above, pulverization was attempted as described later to evaluate whether the solution was pulverizable or not.

### Example 1-3

### Preparation of an aqueous precursor solution of the cement dispersant of the fifth embodiment

To 50 g of the aqueous solution (C) obtained in the Production Example 3, 10 g of an aqueous solution containing 40% by weight of PEIEO obtained in the Production Example 6 was added and mixed until the reaction system became homogeneous, to obtain an aqueous solution (1-3) in which 40% by weight of solid content (polycarboxylic acid type copolymer (3) + PEIEO) was contained.

Using the aqueous solution (1-3) obtained as described above, pulverization was attempted as described later to evaluate whether the solution was pulverizable or not.

### Example 1-4

### Preparation of an aqueous precursor solution of the cement dispersant of the fifth embodiment

To 50 g of the aqueous solution (A) obtained in the Production Example 1, 10 g of an aqueous solution containing 40% by weight of PEIAO obtained in the Production Example 8 was added and mixed until the reaction system became homogeneous, to obtain an aqueous solution (1-4) in which 40% by weight of solid content (polycarboxylic acid type copolymer (1) + PEIAO) was contained.

Using the aqueous solution (1-4) obtained as described above, pulverization was attempted as described later to evaluate whether the solution was pulverizable or not.

### Example 1-5

### Preparation of an aqueous precursor solution of the cement dispersant of the fifth embodiment

To 50 g of the aqueous solution (D) obtained in the Production Example 4, 10 g of an aqueous solution containing 40% by weight of PEIEO obtained in the Production Example 6 was added and mixed until the reaction system became homogeneous, to obtain an aqueous solution (1-5) in which 40% by weight of solid content (polycarboxylic acid type copolymer (4) + PEIEO) was contained.

Using the aqueous solution (1-5) obtained as described above, pulverization was attempted as described later to evaluate whether the solution was pulverizable or not.

### Example 2-1

### Synthesis of the polycarboxylic acid type copolymer in the fourth embodiment, and preparation of an aqueous precursor solution of the cement dispersant of the fourth embodiment containing said copolymer

A glass-made reactor equipped with a thermometer, a stirrer, a dropping funnel, a nitrogen introduction pipe, and a reflux cooling apparatus was prepared. Into the reactor, 300 g of SB3600 obtained in the Production Example 11 and 0.08 g of sodium hydroxide were charged, and temperature was raised up to 90°C under an air atmosphere. When an internal temperature became stabilized at 90°C, 22.9 g of glycidyl methacrylate was added over one hour. After completion of the addition, stirring was continued at 90°C for two hours, to obtain the sorbitol / ethyleneoxide adduct monomer (hereinafter, also referred to as "SB-EO adduct monomer").

A glass-made reactor equipped with a thermometer, a stirrer, a dropping funnel, a nitrogen introduction pipe, and a reflux cooler was separately prepared. Into the reactor, 82.5 g of water was charged, and an inside of the reactor was replaced with nitrogen gas under stirring, then heated up to 80°C under a nitrogen atmosphere. When an internal temperature became stabilized at 80°C, an aqueous monomer solution prepared by dissolving 72.3 g of MPG25E forming the repeating unit represented by the Chemical Formula 3, 22.5 g of methacrylic acid forming the repeating unit represented by the Chemical Formula 4, 25.2 g of the SB-EO adduct monomer obtained above, 64.6 g of water and 2.88 g of 3-mercaptopropionic acid as a chain transfer agent, and 22.5 g of a 4.6% aqueous solution of ammonium persulfate were added drop-wise over 3 hours. Thereafter, temperature was maintained at 80°C successively for one hour to complete the polymerization reaction.

After completion of the reaction, the reaction system was subjected to a neutralization treatment with sodium hydroxide (degree of neutralization to carboxylic acid was 70%), to obtain an aqueous solution (2-1) in which 40% by weight of solid content (polycarboxylic acid type copolymer (7)) was contained. In this connection, weight average molecular weight of the polycarboxylic acid type copolymer (7) was 25,000.

Using the aqueous solution (2-1) obtained as described above, pulverization was attempted as described later to evaluate whether the solution was pulverizable or not.

### Example 2-2

### Synthesis of the polycarboxylic acid type copolymer in the fourth embodiment, and preparation of an aqueous precursor solution of the cement dispersant of the sixth embodiment by mixing said copolymer and a polyhydric alcohol alkylene oxide adduct.

A glass-made reactor equipped with a thermometer, a stirrer, a dropping funnel, a nitrogen introduction pipe, and a reflux cooler was prepared. Into the reactor, 82.5 g of water was charged, and an inside of the reactor was replaced with nitrogen gas under stirring, then heated up to 80°C under a nitrogen atmosphere. When an internal temperature became stabilized at 80°C, an aqueous monomer solution prepared by mixing 84.3 g of MPG25E forming the repeating unit represented by the Chemical Formula 3, 22. 5 g of methacrylic acid forming the repeating unit represented by the Chemical Formula 4, 13.2 g of the SB-EO adduct monomer obtained above, 64.6 g of water and 2.88 g of 3-mercaptopropionic acid as a chain transfer agent, and 22.5 g of a 4.6% aqueous solution of ammonium persulfate were added drop-wise over 3 hours. Thereafter, temperature was maintained at 80°C successively for one hour to complete the polymerization reaction.

After completion of the reaction, the reaction system was subjected to a neutralization treatment with sodium hydroxide (degree of neutralization to carboxylic acid was 70%), to obtain an aqueous solution in which 40% by weight of solid content (polycarboxylic acid type copolymer (8)) was contained. In this connection, weight average molecular weight of the polycarboxylic acid type copolymer was 22, 000.

To 49 g of an aqueous solution containing 40% by weight of the polycarboxylic acid type copolymer (8), 1 g of an aqueous solution containing 40% by weight of SB3600 was added and mixed until the reaction system became homogeneous, to obtain an aqueous solution (2-2) in which 40% by weight of solid content (polycarboxylic acid type copolymer (8) + SB3600) was contained.

Using the aqueous solution (2-2) obtained as described above, pulverization was attempted as described later to evaluate whether the solution was pulverizable or not.

### Example 2-3

### Preparation of an aqueous precursor solution of the cement dispersant of the sixth embodiment

To 50 g of an aqueous solution (B) obtained in the Production Example 2, 10 g of an aqueous solution containing 40% by weight of SB3600 was added and mixed until the reaction systembecame homogeneous, to obtain an aqueous solution (2-3) in which 40% by weight of solid content (polycarboxylic acid type copolymer (2) + SB3600) was contained.

Using the aqueous solution (2-3) obtained as described above, pulverization was attempted as described later to evaluate whether the solution was pulverizable or not.

### Example 2-4

### Preparation of an aqueous precursor solution of the cement dispersant of the sixth embodiment

To 50 g of an aqueous solution (D) obtained in the Production Example 4, 10 g of an aqueous solution containing 40% by weight of SB1200 was added and mixed until the reaction systembecame homogeneous, to obtain an aqueous solution (2-4) in which 40% by weight of solid content (polycarboxylic acid type copolymer (4) + SB1200) was contained.

Using the aqueous solution (2-4) obtained as described above, pulverization was attempted as described later to evaluate whether the solution was pulverizable or not.

### Example 2-5

### Preparation of an aqueous precursor solution of the cement dispersant of the sixth embodiment

To 50 g of an aqueous solution (E) obtained in the Production Example 5, 5.5 g of an aqueous solution containing 40% by weight of SB1200 was added and mixed until the reaction system became homogeneous, to obtain an aqueous solution (2-5) in which 40% by weight of solid content (polycarboxylic acid type copolymer (5) + SB1200) was contained.

Using the aqueous solution (2-5) obtained as described above, pulverization was attempted as described later to evaluate whether the solution was pulverizable or not.

### Comparative Example 1

Using the aqueous solution (A) obtained in the Production Example 1, pulverization was attempted as described later to evaluate whether the solution was pulverizable or not.

### Comparative Example 2

Using the aqueous solution (C) obtained in the Production Example 3, pulverization was attempted as described later to evaluate whether the solution was pulverizable or not.

### Comparative Example 3

### Synthesis of a polycarboxylic acid type copolymer mixed with a polyethyleneoxide

To 50 g of an aqueous solution (A) as obtained in the Production Example 1, 10 g of an aqueous solution containing 40% by weight of polyethyleneoxide (molecular weight thereof is 4,000; hereinafter, also referred to as "PEG") was added and mixed until the reaction system became homogeneous, to obtain an aqueous solution (F) in which 40% by weight of solid content (polycarboxylic acid type copolymer (1) + PEG) was contained.

Using the aqueous solution (F) obtained as described above, pulverization was attempted as described later to evaluate whether the solution was pulverizable or not.

### Comparative Example 4

### Synthesis of a polycarboxylic acid type copolymer mixed with a polyethyleneoxide

To 50 g of an aqueous solution (C) as obtained in the Production Example 3, 10 g of an aqueous solution containing 40% by weight of PEG was added and mixed until the reaction system became homogeneous, to obtain an aqueous solution (G) in which 40% by weight of solid content (polycarboxylic acid type copolymer (3) + PEG) was contained.

Using the aqueous solution (G) obtained as described above, pulverization was attempted as described later to evaluate whether the solution was pulverizable or not.

### Pulverization Test

Using aqueous solutions (1-1 to 1-5, 2-1 to 2-5, A, C, F, and G) obtained in each of the Examples and Comparative Examples, pulverization tests were conducted by the following procedures.

Each of the aqueous solutions was supplied to a glass-made petri dish having a diameter of 13 cm so that solid content became 20 g after drying. The solution was left to stand for 24 hours under an environment of 50°C and 50 Torr (about 6.7 × 10³ Pa) to remove water. After drying, the solid was left to stand for one day in a desiccator, and a resultant product was pulverized in a mortar. The pulverized powder was passed through a sieve of 16 meshes to obtain a powdery cement dispersant having a certain particle size distribution.

It was evaluated whether each of the above solutions can be pulverized or not by the above process. The results of evaluation are shown in the following Table 1. The evaluation was conducted according to the following criteria:
○: A powdery cement dispersant having a fluidity was obtained;
Δ: Solid was hardly separated from a Petri dish and difficult to be pulverized;
× : Solid became a syrupy or a sticky film and could not be pulverized.

**[Table 1]**

| | | Neutralizing salt | Additive | Introducing mode of the additive | Mw | Composition of solid content in the aqueous solution | Ratio of Polymer/Adduct in weight | Evaluation of pulverization |
|---|---|---|---|---|---|---|---|---|
| Example 1-1 | Solution(1-1) | Na | PEIEO | Reaction | 14700 | MPG25E/MAA/PEIE0=63/16/21 | 100/0 | ○ |
| Example 1-2 | Solution(1-2) | Na | PEIEO | Mix | 23000 | (MPG25E/MAA=83/17)+PEIE0 | 83/17 | ○ |
| Example 1-3 | Solution(1-3) | Ca | PEIEO | Mix | 23000 | (MPG25EIMAA=83/17)+PEIE0 | 83/17 | ○ |
| Example 1-4 | Solution(1-4) | Na | PEIA0 | Mix | 23000 | (MPG25E/MAA=83/17) +PEIA0 | 83/17 | ○ |
| Example 1-5 | Solution(1-5) | Na | PEIE0 | Mix | 34000 | (IPN50/AA=88/12) +PEIEO | 83/17 | ○ |
| Example 2-1 | Solution(2-1) | Na | SB3600 | Reaction | 25000 | MPG25E/MAA/SB-EOadduct=60/19/21 | 100/0 | ○ |
| Example 2-2 | Solution(2-2) | Na | SB3600 | Reaction/Mix | 22000 | (MPG25E/MAA/SB-EOadduct =70/19/11)+SB3600 | 98/2 | ○ |
| Example 2-3 | Solution(2-3) | Na | SB3600 | Mix | 19000 | (MPG25E/MAA=83/17)+SB3600 | 83/17 | ○ |
| Example 2-4 | Solution (2-4) | Na | SB1200 | Mix | 34000 | (IPN50/AA=88/12) +SB1200 | 83/17 | O |
| Example 2-5 | Solution(2-5) | Ca | SB1200 | Mix | 34000 | (IPN50/AA=88/12)+SB1200 | 90/10 | O |
| C.Example 1 | Solution(A) | Na | - | - | 23000 | MPG25E/MAA=83/17 | 100/0 | × |
| C.Example 2 | Solution(C) | Ca | - | - | 23000 | MPG25E/MAA=83/17 | 100/0 | × |
| C.Example 3 | Solution(F) | Na | PEG | - | 24000 | (MPG25E/MAA=83/17)+PEG | 83/17 | × |
| C. Example 4 | Solution(G) | Ca | PEG | - | 24000 | (MPG25E/MAA=83/17)+PEG | 83/17 | × |

| | | | | | | | | |
|---|---|---|---|---|---|---|---|---|
| Mw: Weight average molecular weight | | | | | | | | |
| MAA: Methacrylic acid | | | | | | | | |
| AA: Acrylic acid | | | | | | | | |

From the results shown in Table 1, it is shown that by copolymerizing a monomer derived from a branched compound (a PAI/PAO adduct or a polyhydric alcohol alkyleneoxide adduct) with a polycarboxylic acid type copolymer as a main component of the cement dispersant or by mixing said polycarboxylic acid type copolymer with said branched compound, pulverization of an aqueous solution containing said copolymer can be easily performed by drying and a powdery cement dispersant can be obtained. Further, it is shown that by pulverizing by drying an aqueous solution further containing a branched compound in addition to a copolymer obtained by copolymerizing a monomer derived from a branched compound with a polycarboxylic acid type copolymer as a main component of the cement dispersant, a powdery cement dispersant having an extremely excellent fluidity can be obtained.

### Mortar Test

For the purpose of studying a dispersibility of the powdery cement dispersant of the present invention, mortar tests were conducted by adding powdery cement dispersants obtained by pulverizing the aqueous solution (1-2) obtained in Example 1-2 and the aqueous solution (2-3) obtained in Example 2-3, and polymer blocks obtained in the pulverizing processes of the aqueous solution (F) obtained in Comparative Example 3 and the aqueous solution (G) obtained in Comparative Example 4 were added to mortar, respectively. In this connection, the powdery cement dispersants derived from Example 1-2 and Example 2-3 were added as a powder state. On the contrary, polymer blocks derived from Comparative Example 3 and Comparative Example 4 were added so that those were dissolved in water in the mortar.

The mortar composition was as described below.

| | |
|---|---|
| TAIHEIYO ordinary Portland cement: | 900 g |
| Standard sand defined by JIS R 5201: | 1,350 g |
| Water: | 270 g |

Mortar flow was measured according to the flow test of JIS R 5201 by using a mixer and a kneading method similar to a kneading method according to Item 10.4.3 in JIS R 5201. The measurement results are shown in the following Table 2.

**[Table 2]**

| | Cement Dispersant | Dosage Dosage (wt%/C) | Mortar Flow (mm) |
|---|---|---|---|
| Example 1-2 | Powdery polymer derived from aqueous solution (1-2) | 0.13 | 173 |
| Example 2-3 | Powdery polymer derived from aqueous solution (2-3) | 0.13 | 177 |
| Comparative Example 3 | Polymer block derived from aqueous solution (F) | 0.13 | 162 |
| Comparative Example 4 | Polymer block derived from aqueous solution (G) | 0.13 | 160 |

From the results shown in Table 2, it turns out that with the same addition amount, the powdery cement dispersant of the present invention provides rather higher mortar flow, and also that the powdery cement dispersant of the present invention is not only easy to pulverize but also excellent in dispersebility.

The present application is based on Japanese Patent Application No. 2005-104638 filed on March 31, 2005, and the disclosures are incorporated herein by reference in entirety.

## Claims

1. A powdery cement dispersant comprising, as a main component, a polycarboxylic acid type copolymer having:
a repeating unit (I) derived from an unsaturated polyalkylene glycol type monomer;
a repeating unit (II) derived from an unsaturated carboxylic acid type monomer; and
a repeating unit (III) derived from a branched compound monomer having a branched structure containing 3 or more polyalkyleneimine chains or polyoxyalkylene chains in a molecule.

2. The powdery cement dispersant according to claim 1, wherein the repeating unit (I) is represented by the following Chemical Formula 1, and the repeating unit (II) is represented by the following Chemical Formula 2: 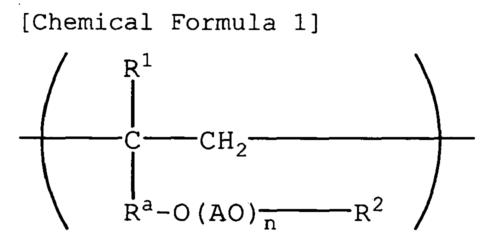 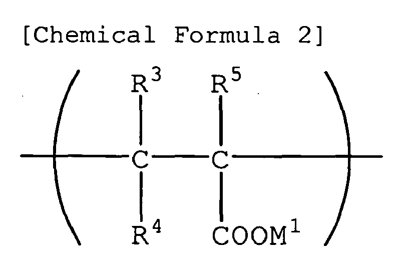 wherein R¹ represents a hydrogen atom or a methyl group, R² represents a hydrogen atom or a hydrocarbon group having 1 to 30 carbon atoms, each of AO independently represents an oxyalkylene group having 2 to 18 carbon atoms, R^{a} represents an alkylene group having 0 to 2 carbon atoms, n represents an average addition mole number of an oxyalkylene group and is 2 to 300, each of R³ and R⁴ independently represent a hydrogen atom, a methyl group or -COOM² (provided that a case where both of R³ and R⁴ are -COOM² is excluded), R⁵ represents a hydrogen atom, a methyl group or -CH₂COOM³ (provided that when R⁵ is -CH₂cOOM³, each of R³ and R⁴ independently represents a hydrogen atom or a methyl group), and each of M¹, M² and M³ independently represents a hydrogen atom, a metal atom, an ammonium group or an organic amine group.

3. The powdery cement dispersant according to claim 1, wherein the repeating unit (I) is represented by the following Chemical Formula 3, and the repeating unit (II) is represented by the following Chemical Formula 4: 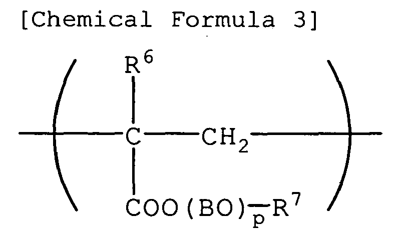 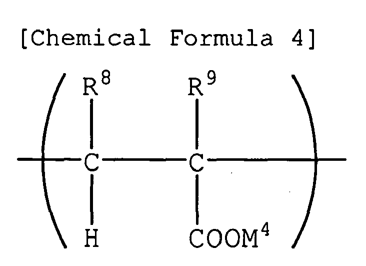 wherein R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and is 2 to 300, R⁸ represents a hydrogen atom or a methyl group, R⁹ represents a hydrogen atom, a methyl group or -CH₂COOM⁵ and each of M⁴ and M⁵ independently represents a hydrogen atom, a metal atom, an ammonium group or an organic amine group.

4. The powdery cement dispersant according to any one of claims 1 to 3, wherein a ratio of contents of the repeating unit (I), the repeating unit (II) and the repeating unit (III) in the polycarboxylic acid type copolymer is (I) / (II) /(III) = (40 to 90) / (5 to 30) / (5 to 50) % by weight based on the total content of these repeating units being 100% by weight.

5. A powdery cement dispersant comprising:
a polycarboxylic acid type copolymer (A) having a repeating unit (IV) derived from an unsaturated polyalkylene glycol type monomer and a repeating unit (V) derived from an unsaturated carboxylic acid type monomer; and
a branched compound (B) having a branched structure containing 3 or more polyalkyleneimine chains or polyoxyalkylene chains in a molecule.

6. The powdery cement dispersant according to claim 5, wherein the polycarboxylic acid type copolymer (A) has a repeating unit represented by the following Chemical Formula 5 or the following Chemical Formula 6: 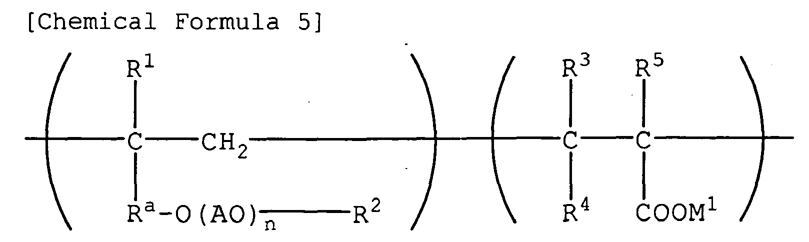 wherein R¹ represents a hydrogen atom or a methyl group, R² represents a hydrogen atom or a hydrocarbon group having 1 to 30 carbon atoms, each of AO independently represents an oxyalkylene group having 2 to 18 carbon atoms, R^{a} represents an alkylene group having 0 to 2 carbon atoms, n represents an average addition mole number of an oxyalkylene group and is 2 to 300, each of R³ and R⁴ independently represents a hydrogen atom, a methyl group or -COOM² (provided that a case where both of R³ and R⁴ are -COOM² is excluded), R⁵ represents a hydrogen atom, a methyl group or -CH₂COOM³ (provided that when R⁵ is -CH₂COOM³, each of R³ and R⁴ independently represents a hydrogen atom or a methyl group), and each of M¹, M² and M³ independently represents a hydrogen atom, a metal atom, an ammonium group or an organic amine group. 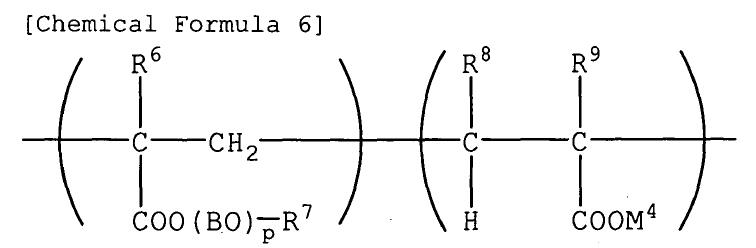 wherein R⁶ represents a hydrogen atom or a methyl group, R⁷ represents a hydrogen atom or a hydrocarbon group having 1 to 30 carbon atoms, each of BO independently represents an oxyalkylene group having 2 to 18 carbon atoms, p represents an average addition mole number of an oxyalkylene group and is 2 to 300, R⁸ represents a hydrogen atom or a methyl group, R⁹ represents a hydrogen atom, a methyl group or -CH₂COOM⁵, and each of M⁴ and M⁵ independently represents a hydrogen atom, a metal atom, an ammonium group or an organic amine group.

7. The powdery cement dispersant according to claim 5 or 6, wherein a ratio of contents of the polycarboxylic acidtypecopolymer (A) and the branched compound (B) is (A)/(B) = (50 to 98) / (2 to 50) % by weight based on the total content of these components being 100% by weight.

8. The powdery cement dispersant according to claim 6 or 7, wherein the polycarboxylic acid type copolymer (A) has a repeating unit represented by the Chemical Formula 6.

9. The powdery cement dispersant according to any one of claims 1 to 8, wherein the branched compound is a compound in which an alkyleneoxide is added to a polyalkyleneimine.

10. The powdery cement dispersant according to Claim 9, wherein the polyalkyleneimine is polyethyleneimine.

11. The powdery cement dispersant according to any one of claims 1 to 10, wherein the branched compound is a compound in which an alkyleneoxide is added to a polyhydric alcohol having 3 or more hydroxyl groups in a molecule on an average.

12. The powdery cement dispersant according to claim 11, wherein a number of hydroxyl groups possessed by one molecule of the polyhydric alcohol is 3 to 300.
